(19) **Europäisches Patentamt / European Patent Office / Office européen des brevets**

(11) **EP 4 761 423 A1**

(12) **EUROPEAN PATENT APPLICATION**
published in accordance with Art. 153(4) EPC

(43) Date of publication:
**17.06.2026 Bulletin 2026/25**

(21) Application number: **23948092.4**

(22) Date of filing: **10.08.2023**

(51) International Patent Classification (IPC):
**H04W 72/1273** (2023.01)   **H04W 72/04** (2023.01)

(52) Cooperative Patent Classification (CPC):
**H04W 72/04; H04W 72/1273**

(86) International application number:
**PCT/CN2023/112337**

(87) International publication number:
**WO 2025/030521 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **XU, Jing
Dongguan, Guangdong 523860 (CN)**

(74) Representative: **Novagraaf Technologies
2 rue Sarah Bernhardt
CS90017
92665 Asnières-sur-Seine Cedex (FR)**

(54) **PRG DETERMINATION METHOD AND APPARATUS, PRB SCHEDULING METHOD AND APPARATUS, AND DEVICE**

(57)     A PRG determination method and apparatus, a PRB scheduling method and apparatus, and a device, relating to the techmical field of communications. The PRG determination method comprises: if PRBs scheduled in at least one downlink sub-band in a DL BWP are consecutive and satisfy a first condition, determining that the PRG size of a first downlink sub-band is the number of PRBs scheduled in the first downlink sub-band, or determining that the PRG size of the DL BWP is the number of PRBs scheduled in the DL BWP (410), wherein the first downlink sub-band is a downlink sub-band in the DL BWP, a part of frequency domain resources corresponding to the DL BWP are configured as an uplink sub-band, and the first condition is related to the number of PRBs scheduled. By means of the method, when downlink resources are not consecutive due to the uplink sub-band being configured correspondingly in the DL BWP, a large PRG can still be configured for the downlink sub-band or the DL BWP, thereby improving the channel estimation performance.

Determining, by a terminal device, that a PRG size of a first DL subband is a quantity of scheduled PRBs in the first DL subband or that a PRG size of a DL BWP is a quantity of scheduled PRBs in the DL BWP in a case where scheduled PRBs in at least one DL subband in the DL BWP are contiguous and satisfy a first condition    ⌐410

FIG. 4

## Description

## TECHNICAL FIELD

Embodiments of the present disclosure relate to the technical field of communications, and in particular, relate to a method and apparatus for determining a precoding resource block group (PRG), a method and apparatus for scheduling a physical resource block (PRB), and a device thereof.

## RELATED ART

At present, in a wireless communication system, a network device is capable of simultaneously transmitting and receiving data in different subbands of a same time domain unit (for example, subframe). For example, a part of frequency domain resources corresponding to a downlink (DL) bandwidth part (BWP) are configured as an uplink (UL) subband for UL transmission.

However, how to configure a PRG size in the above case requires further discussion and research.

## SUMMARY

Embodiments of the present disclosure provide a method and apparatus for determining a PRG, a method and apparatus for scheduling a PRB, and a device thereof. The technical solutions are as follows.

According to some embodiments of the present disclosure, a method for determining a PRG is provided. The method includes:

determining that a PRG size of a DL subband is a quantity of PRBs in the first DL subband or that a PRG size of a DL BWP is a quantity of scheduled PRBs in the DL BWP in a case where scheduled PRBs in at least one DL subband in the DL BWP are contiguous and satisfy a first condition.

The first DL subband is a DL subband in the DL BWP, a part of frequency domain resources corresponding to the DL BWP are configured as a UL subband, and the first condition is related to a quantity of scheduled PRBs.

According to some embodiments of the present disclosure, a method for scheduling a PRB is provided. The method includes:

scheduling PRBs that are contiguous and satisfy a first condition in at least one DL subband in a DL BWP, wherein a part of frequency domain resources corresponding to the DL BWP is configured as a UL subband, a first DL subband is a DL subband in the DL BWP, a PRG size of the first DL subband is a quantity of scheduled PRBs in the first DL subband or a PRG size of the DL BWP is a quantity of scheduled PRBs in the DL BWP, and the first condition is related to a quantity of scheduled PRBs.

According to some embodiments of the present disclosure, an apparatus for determining a PRG is provided. The apparatus includes:

a determining module, configured to determine that a PRG size of a DL subband is a quantity of PRBs in the first DL subband or that a PRG size of a DL BWP is a quantity of scheduled PRBs in the DL BWP in a case where scheduled PRBs in at least one DL subband in the DL BWP are contiguous and satisfy a first condition.

The first DL subband is a DL subband in the DL BWP, a part of frequency domain resources corresponding to the DL BWP are configured as a UL subband, and the first condition is related to a quantity of scheduled PRBs.

According to some embodiments of the present disclosure, an apparatus for scheduling a PRB is provided. The apparatus includes:

a scheduling module, configured to schedule PRBs that are contiguous and satisfy a first condition in at least one DL subband in a DL BWP, wherein a part of frequency domain resources corresponding to the DL BWP are configured as a UL subband, a first DL subband is a DL subband in the DL BWP, a PRG size of the first DL subband is a quantity of scheduled PRBs in the first DL subband or a PRG size of the DL BWP is a quantity of scheduled PRBs in the DL BWP, and the first condition is related to a quantity of scheduled PRBs.

According to some embodiments of the present disclosure, a communication device is provided. The communication device includes a processor and a memory; wherein the memory is configured to store at least one computer program, which when executed by the processor, causes the communication device to perform the method for determining a PRG or the method for scheduling a PRB as described above. In some embodiments, the communication device is a terminal device or the communication device is a network device.

According to some embodiments of the present disclosure, a computer-readable storage medium is provided. The computer-readable storage medium stores at least one computer program therein, wherein the at least one computer program, when executed by a processor, causes the processor to perform the method for determining a PRG or the method for scheduling a PRB as described above.

According to some embodiments of the present disclosure, a chip is provided. The chip includes at least one programmable logic circuit and/or at least one program instruction, wherein the chip, when running, is caused to perform the method for determining a PRG or the method for scheduling a PRB as described above.

According to some embodiments of the present disclosure, a computer program product is provided. The computer program product includes at least one computer program stored in a computer-readable storage medium. The at least one computer program, when read from the computer-readable storage medium and executed by a processor, causes the processor to perform the method for determining a PRG or the method for scheduling a PRB as described above.

The technical solutions according to the embodiments of the present disclosure achieve at least the following beneficial effects.

The terminal device determines the PRG size of the DL BWP or a PRG size of a DL subband in the DL BWP based on whether the scheduled PRBs in each DL subband in the DL BWP are contiguous and whether the quantity of scheduled PRBs satisfies the first condition. In a case where scheduled PRBs in at least one DL subband in the DL BWP are contiguous and satisfy the first condition, the terminal device determines that the PRG size of the first DL subband is wideband (namely, the quantity of scheduled PRBs in the first DL subband) or that the PRG size of the DL BWP is wideband (namely, the quantity of scheduled PRBs in the DL BWP). In this way, in a case where scheduled DL resources in the DL BWP are non-contiguous due to a configured UL subband, a large PRG (that is, the PRG size is wideband) may still be configured for the DL subband or the DL BWP, such that channel estimation performance is improved.

## BRIEF DESCRIPTION OF DRAWINGS

FIG. 1 is a schematic diagram of a network architecture according to some embodiments of the present disclosure;

FIG. 2 is a schematic diagram of a subband non-overlapping full duplex (SBFD) system according to some embodiments of the present disclosure;

FIG. 3 is a schematic diagram of a DL BWP according to some embodiments of the present disclosure;

FIG. 4 is a flowchart of a method for determining a PRG according to some embodiments of the present disclosure;

FIG. 5 is a schematic diagram of a DL BWP according to some other embodiments of the present disclosure;

FIG. 6 is a schematic diagram of a DL BWP according to some other embodiments of the present disclosure;

FIG. 7 is a flowchart of a method for scheduling a PRB according to some embodiments of the present disclosure;

FIG. 8 is a block diagram of an apparatus for determining a PRG according to some embodiments of the present disclosure;

FIG. 9 is a block diagram of an apparatus for scheduling a PRB according to some embodiments of the present disclosure;

FIG. 10 is a schematic structural diagram of a terminal device according to some embodiments of the present disclosure; and

FIG. 11 is a schematic structural diagram of a network device according to some embodiments of the present disclosure.

## DETAILED DESCRIPTION

For clearer descriptions of the objectives, technical solutions, and advantages of the present disclosure, the embodiments of the present disclosure are further described in detail hereinafter with reference to the accompanying drawings.

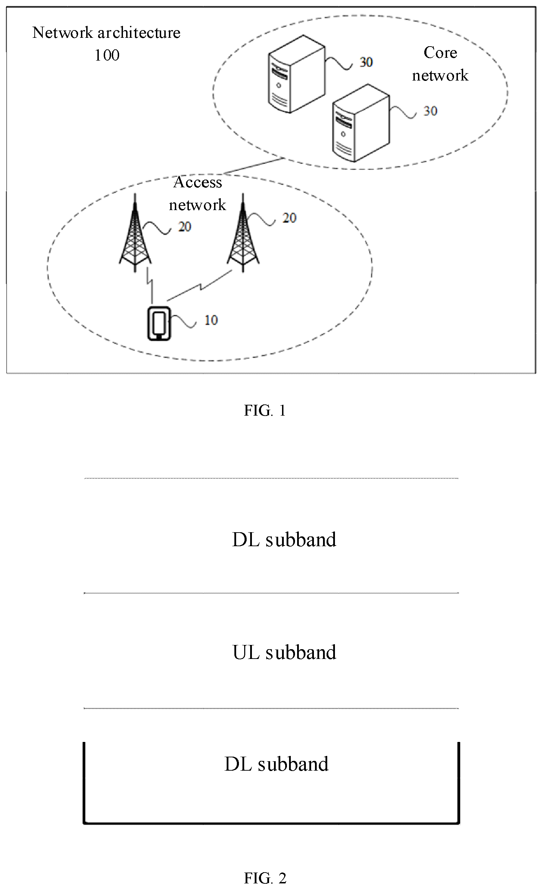

FIG. 1 is a schematic diagram of a network architecture 100 according to some embodiments of the present disclosure. The network architecture 100 may involve a terminal device 10, an access network device 20, and a core network element 30.

The terminal device 10 may be a user equipment (UE), an access terminal, a subscriber unit, a subscriber station, a mobile station, a mobile platform, a remote station, a remote terminal, a mobile device, a wireless communication device, a user agent, or a user apparatus. In some embodiments, the terminal device 10 may also be a cellular phone, a cordless phone, a Session Initiation Protocol (SIP) phone, a wireless local loop (WLL) station, a personal digital assistant (PDA), a handheld device with a wireless communication function, a computing device or another processing device connected to a wireless modem, a vehicle-mounted device, a wearable device, a terminal device in a 5G system, a terminal device in an evolved public land mobile network (PLMN), or the like, which is not limited in the embodiments of the present disclosure. For the convenience of description, the devices mentioned above are collectively referred to as the terminal device. A plurality of terminal devices 10 are usually deployed. At least one terminal device 10 may be distributed in a cell managed by each access network device 20. A terminal device may also be referred to simply as a terminal or UE, and those skilled in the art shall understand its meaning.

The access network device 20 is a device deployed in an access network to provide a wireless communication function for the terminal device 10. The access network device 20 may include various forms of macro base stations, micro base stations, relay stations, access points, and the like. In systems employing different radio access technologies, devices with the function of the access network device may have different names, for example, gNodeB or gNB in a 5G NR system. As the communication technologies evolve, the name "access network device" may change. For the convenience of description, in the embodiments of the present disclosure, the above apparatuses providing the wireless communication function for the terminal device 10 are collectively referred to as the access network device. In some embodiments, a communication relationship may be established between the terminal device 10 and the core network element 30 using the access network device 20. For example, in an LTE system, the access network device 20 may be an evolved universal terrestrial radio access network (EUTRAN) or at least one eNodeB in the EUTRAN. In a 5G NR system, the access network device 20 may be a radio access network (RAN) or at least one gNB in the RAN. In the embodiments of the present disclosure, unless otherwise specified, the term "network device" is the access network device 20, e.g., a base station.

The core network element 30 is an element deployed in a core network. The core network element 30 mainly functions to provide a user connection, user management and service bearing, and to provide an interface to an external network as a bearer network. For example, core network elements in the 5G NR system may include elements such as an access and mobility management function (AMF) entity, a user plane function (UPF) entity, and a session management function (SMF) entity.

In some embodiments, the access network device 20 communicates with the core network element 30 using a specific air interface technology, e.g., an NG interface in the 5G NR system. The access network device 20 communicates with the terminal device 10 using a specific air interface technology, e.g., over a Uu interface.

The "5G NR system" in the embodiments of the present disclosure may also be referred to as a 5G system or an NR system, but those skilled in the art may understand its meaning. The technical solutions according to the embodiments of the present disclosure may be applicable to the LTE system, the 5G NR system, an evolved system subsequent to the 5G NR system (e.g., Beyond 5G (B5G) System, 6th Generation System), a narrowband Internet of things (NB-IoT) system, and other communication systems. This is not limited in the present disclosure.

In the embodiments of the present disclosure, the network device provides services for a cell. The terminal device communicates with the network device over a transmission resource (for example, a frequency-domain resource or a spectrum resource) on a carrier used by the cell. The cell may be a cell corresponding to the network device (for example, the base station). The cell may belong to a macro base station or a base station corresponding to a small cell. The small cell herein may include a metro cell, a micro cell, a pico cell, a femto cell, and the like. These small cells have the characteristics of small coverage and low transmit power, and are applicable to providing high-rate data transmission services.

Prior to description of the technical solutions provided in the present disclosure, some relevant technical knowledge involved in the present disclosure is described. The following related arts, as optional solutions, may be arbitrarily combined with the technical solutions according to the embodiments of the present disclosure, and all fall within the protection scope of the embodiments of the present disclosure. The embodiments of the present disclosure include at least part of the following content.

1. UL subband in DL symbol/slot

A cross-division duplex (XDD)/SBFD technology enables simultaneous data transmission and reception in different subbands of a same time domain unit. The technology is mainly applicable to an access network device. A terminal device remains in its current state, that is, the terminal device is only capable of transmitting or receiving data in a time domain unit. The time domain unit is a division unit in time domain. The time domain unit may be a subframe, a slot, or another type of time domain unit. This is not limited in the present disclosure. As illustrated in FIG. 2, a middle subband of a DL slot is configured as a UL subband. In a case where a terminal device is configured/instructed to receive data in the DL slot, for example, receive a physical downlink shared channel (PDSCH), for an overlapping part of the PDSCH and the UL subband, because an access network device is in a receiving state and incapable of transmitting data in the subband, the access network device transmits the PDSCH only on DL resources on both sides of the subband.

2. PRG

The PRG is PRBs of a downlink shared channel (DSCH) that use same precoding. $P'_{BWP,i}$ represents a PRG size, namely a quantity of the PRBs of the DSCH that use the same precoding. Its value falls within {2, 4, wideband}. For example, in a case where the value of $P'_{BWP,i}$ is 2, the PRG size is 2. In a case where the value of $P'_{BWP,i}$ is 4, the PRG size is 4. In a case where the value of $P'_{BWP,i}$ is wideband, the PRG size is a quantity of scheduled PRBs in a current DL BWP. The PRG size may be configured dynamically or semi-statically. $P'_{BWP,i}$ contiguous PRBs in the BWP are grouped into one PRG. Additional optimization is made for obtaining a first PRG and a last PRG through grouping. A specific method is as follows:

A size of the first PRG is $P'_{BWP,i} - N^{start}_{BWP,i} \bmod P'_{BWP,i}$.

A size of the last PRG is as follows:

In a case where $(N^{start}_{BWP,i} + N^{size}_{BWP,i}) \bmod P'_{BWP,i} \neq 0$, the size of the last PRG is $(N^{start}_{BWP,i} + N^{size}_{BWP,i}) \bmod P'_{BWP,i}$.

Otherwise, the size of the last PRG is $P'_{BWP,i}$.

Sizes of the other PRGs are $P'_{BWP,i}$. $P'_{BWP,i}$ may be dynamically indicated. In a case where the dynamic indication corresponds to "n2-wideband" or "n4-wideband", $P'_{BWP,i}$ is determined according to the following rule:

In a case where scheduled PRBs are contiguous and a quantity of the scheduled PRBs is greater than half of the DL BWP, $P'_{BWP,i}$ is wideband (that is, $P'_{BWP,i}$ is the quantity of scheduled PRBs in the DL BWP). Otherwise, $P'_{BWP,i}$ is a configured value of 2 or 4.

For example, in a case where "n2-wideband" is dynamically configured, scheduled PRBs are contiguous, and a quantity of the scheduled PRBs is greater than half of the DL BWP, $P'_{BWP,i}$ is wideband (that is, $P'_{BWP,i}$ is the quantity of scheduled PRBs in the DL BWP). Otherwise, $P'_{BWP,i}$ is a configured value of 2.

For example, in a case where "n4-wideband" is dynamically configured, scheduled PRBs are contiguous, and a quantity of the scheduled PRBs is greater than half of the DL BWP, $P'_{BWP,i}$ is wideband (that is, $P'_{BWP,i}$ is the quantity of scheduled PRBs in the DL BWP). Otherwise, $P'_{BWP,i}$ is a configured value of 4.

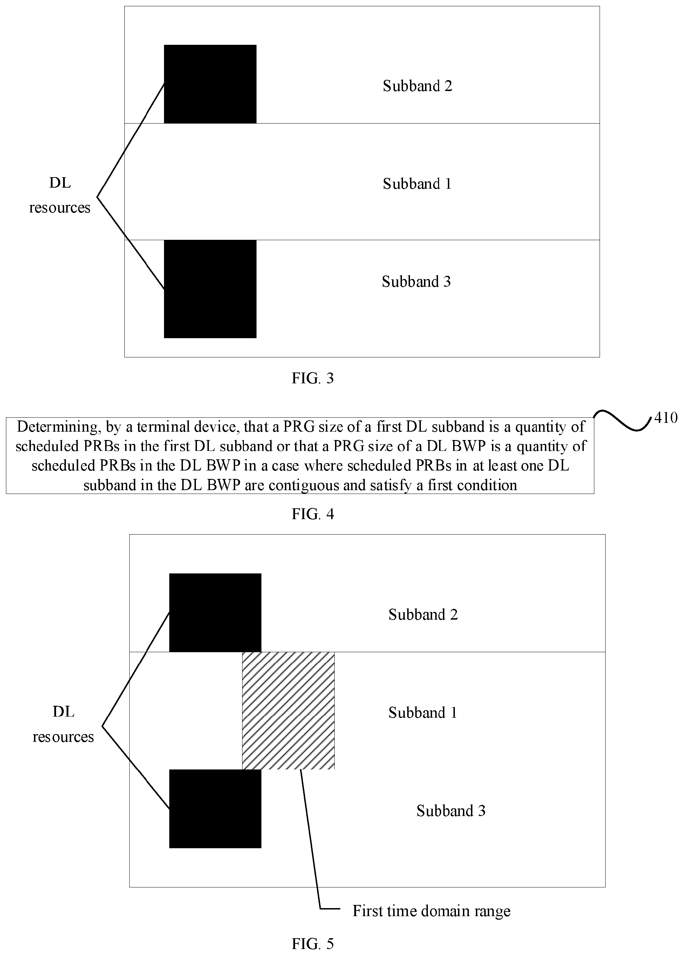

However, in an SBFD system, even in a case where scheduled PRBs are contiguous, they may be divided into two non-contiguous DL resources due to a UL subband. As illustrated in FIG. 3, in a case where a subband 1 is configured as a UL subband, DL resources are divided into two parts by the UL subband and are respectively located in two DL subbands. In a case where the dynamic indication corresponds to "n2-wideband" or "n4-wideband", a wideband mode fails to be used according to the above rule.

FIG. 4 is a flowchart of a method for determining a PRG according to some embodiments of the present disclosure. The method is performed by a terminal device. The method may include process 410.

In process 410, the terminal device determines that a PRG size of a first DL subband is a quantity of scheduled PRBs in the first DL subband or that a PRG size of a DL BWP is a quantity of scheduled PRBs in the DL BWP in a case where scheduled PRBs in at least one DL subband in the DL BWP are contiguous and satisfy a first condition.

In some embodiments, the first DL subband is a DL subband in the DL BWP, a part of frequency domain resources corresponding to the DL BWP are configured as a UL subband, and the first condition is related to a quantity of scheduled PRBs.

In some embodiments, the first condition is related to the quantity of scheduled PRBs in the first DL subband. In some embodiments, the first condition is related to the quantity of scheduled PRBs in the DL BWP. In some embodiments, the first condition is related to a quantity of scheduled PRBs in each DL subband in the DL BWP. In some embodiments, the first condition is related to a quantity of scheduled PRBs in any DL subband in the DL BWP.

In some embodiments, the DL BWP includes at least one DL subband, and a part of frequency domain resources corresponding to the DL BWP are configured as a UL subband.

That the part of the frequency domain resources corresponding to the DL BWP is configured as the UL subband may also be understood as that the part of the frequency domain resources corresponding to the DL BWP overlaps the UL subband.

In some embodiments, DL subbands may be configured in the DL BWP. One or more of the configured DL subbands may be selected to be configured as UL subbands. For example, in FIG. 3, a subband 1, a subband 2, and a subband 3 are configured in the DL BWP. Any one of the subband 1, the subband 2, and the subband 3 may be selected to be configured as a UL subband.

In some embodiments, no DL subband is configured in the DL BWP. Any part of frequency domain resources in the DL BWP may be selected to be configured as a UL subband. For example, the DL BWP includes 60 kHz, and any 15 kHz thereof may be configured as a UL subband.

In some embodiments, the part of frequency domain resources configured as the UL subband may be any part of frequency domain resources in the DL BWP. For example, in FIG. 3, any one of the subband 1, the subband 2, and the subband 3 in the DL BWP may be configured as a UL subband. In some embodiments, a bandwidth occupied by the UL subband in the DL BWP is not limited in the present disclosure. For example, a bandwidth of the DL BWP is 100 MHz, and the bandwidth of the UL subband may be 10 MHz, 50 MHz, or another value.

In some embodiments, the part of frequency domain resources configured as the UL subband may be frequency domain resources corresponding to an entire time domain range of a subband, or frequency domain resources corresponding to a partial time domain range of a subband. As illustrated in FIG. 3, the subband 1 in the DL BWP is configured as a UL subband, and the subbands 2 and 3 are DL subbands. As illustrated in FIG. 5, a diagonal hatching part of a subband 1 in the DL BWP is configured as a UL subband. The other time domain range of the subband 1, excluding a first time domain range, remains a DL subband. Subbands 2 and 3 are DL subbands.

In some embodiments, the first time domain range may be configured at a granularity of orthogonal frequency division multiplexing (OFDM) symbols or at a granularity of time domain units. This is not limited in the present disclosure. For example, the first time domain range is a time domain range of 10 OFDM symbols. For another example, the first time domain range is a time domain range of 2 slots. For another example, the first time domain range is a time domain range of half a slot.

For the scenario illustrated in FIG. 5, in a case where the first time domain range of the subband 1 is configured as a UL subband, in a first case, in a case where time domain resources occupied by transmission of DL data in the DL BWP overlap the first time domain range, it is considered that DL resources configured for the transmission of DL data are divided into two parts by the UL subband and thus are non-contiguous. In a second case, regardless of whether time domain resources occupied by transmission of DL data in the DL BWP overlap the first time domain range, it is considered that DL resources configured for the transmission of DL data are divided into two parts by the UL subband and thus are non-contiguous. Specifically, the above scenario is related to a manner in which a network device schedules PRBs. For example, in a case where the network device schedules resources in the subband 1 that are not configured as a UL subband for DL transmission, the first case applies. In a case where the network device does not schedule resources in the subband 1 that are not configured as a UL subband for DL transmission, the second case applies. In the first case, DL resources are fully utilized for data transmission, but implementation complexity is increased. In the second case, implementation complexity is low, but DL resource utilization is not high.

In some embodiments, one or more UL subbands may be configured in the DL BWP. This is not limited in the present disclosure. For example, as illustrated in FIG. 3, the subband 2 and the subband 3 in the DL BWP are configured as UL subbands. In addition, a quantity, bandwidths, and time domain positions of configured UL subbands may be determined by the network device. This is not limited in the present disclosure.

The following separately describes two aspects: determination of the PRG size of the first DL subband and determination of the PRG size of the DL BWP.

> Case 1: Determination of the PRG size of the first DL subband
> Case 1-1: The PRG size of the first DL subband is determined based on the scheduled PRBs in the first DL subband.

In some embodiments, in a case where the scheduled PRBs in the first DL subband are contiguous and satisfy the first condition, the terminal device determines that the PRG size of the first DL subband is the quantity of scheduled PRBs in the first DL subband. In other words, in a case where the scheduled PRBs in the first DL subband are contiguous and satisfy the first condition, the terminal device determines that the PRG size of the first DL subband is wideband. Wideband means that the PRG size of the first DL subband is the quantity of scheduled PRBs in the first DL subband. For example, in FIG. 3, in a case where the subband 2 is the first DL subband and scheduled PRBs in the subband 2 are contiguous and satisfy the first condition, the terminal device determines that a PRG size of the subband 2 is a quantity of scheduled PRBs in the subband 2.

In some embodiments, in a case where the scheduled PRBs in the first DL subband are non-contiguous and/or do not satisfy the first condition, the terminal device determines that the PRG size of the first DL subband is a configured value. For example, in FIG. 3, in a case where the subband 2 is the first DL subband and the scheduled PRBs in the subband 2 are non-contiguous and/or do not satisfy the first condition, the terminal device determines that the PRG size of the subband 2 is the configured value. The configured value may be predefined or preconfigured, or configured by the network device. This is not limited in the present disclosure. A magnitude of the configured value is not limited in the present disclosure. In some embodiments, the configured value may be 2 or 4.

In some embodiments, in a case where the scheduled PRBs in the first DL subband are non-contiguous and satisfy the first condition, the terminal device determines that the PRG size of the first DL subband is the configured value. For example, in FIG. 3, in a case where the subband 2 is the first DL subband and the scheduled PRBs in the subband 2 are non-contiguous and satisfy the first condition, the terminal device determines that the PRG size of the subband 2 is the configured value.

In some embodiments, in a case where the scheduled PRBs in the first DL subband are contiguous and do not satisfy the first condition, the terminal device determines that the PRG size of the first DL subband is the configured value. For example, in FIG. 3, in a case where the subband 2 is the first DL subband and the scheduled PRBs in the subband 2 are contiguous and do not satisfy the first condition, the terminal device determines that the PRG size of the subband 2 is the configured value.

In some embodiments, in a case where the scheduled PRBs in the first DL subband are non-contiguous and do not satisfy the first condition, the terminal device determines that the PRG size of the first DL subband is the configured value. For example, in FIG. 3, in a case where the subband 2 is the first DL subband and the scheduled PRBs in the subband 2 are non-contiguous and do not satisfy the first condition, the terminal device determines that the PRG size of the subband 2 is the configured value.

In the above method, the PRG size of the first DL subband is determined without being affected by scheduled PRBs in the other DL subbands in the DL BWP, enabling optimal channel estimation in the first DL subband.

Case 1-2: The PRG size of the first DL subband is determined based on scheduled PRBs in any DL subband in the DL BWP.

In some embodiments, in a case where the scheduled PRBs in any DL subband in the DL BWP are contiguous and satisfy the first condition, the terminal device determines that the PRG size of the first DL subband is the quantity of scheduled PRBs in the first DL subband. In other words, in a case where scheduled PRBs in at least one DL subband in the DL BWP are contiguous and satisfy the first condition, the terminal device determines that the PRG size of the first DL subband is the quantity of scheduled PRBs in the first DL subband.

In some embodiments, in a case where scheduled PRBs in a second DL subband are contiguous and satisfy the first condition, the terminal device determines that the PRG size of the first DL subband is the quantity of scheduled PRBs in the first DL subband. The second DL subband is the first DL subband, or the second DL subband is any DL subband other than the first DL subband in the DL BWP. For example, in FIG. 3, in a case where the subband 2 is the first DL subband and scheduled PRBs in the subband 3 are contiguous and satisfy the first condition, the terminal device determines that a PRG size of the subband 2 is a quantity of scheduled PRBs in the subband 2.

In some embodiments, in a case where scheduled PRBs in each DL subband in the DL BWP are non-contiguous and/or do not satisfy the first condition, the terminal device determines that the PRG size of the first DL subband is a configured value. For example, in FIG. 3, in a case where the subband 2 is the first DL subband, the subband 1 is configured as a UL subband, and the scheduled PRBs in each of the subband 2 and the subband 3 are non-contiguous and/or do not satisfy the first condition, the terminal device determines that the PRG size of the subband 2 is the configured value. That the scheduled PRBs in each DL subband in the DL BWP are non-contiguous and/or do not satisfy the first condition means that any DL subband in the DL BWP is non-contiguous, or does not satisfy the first condition, or is non-contiguous and does not satisfy the first condition.

For example, in FIG. 3, that the scheduled PRBs in each DL subband in the DL BWP are non-contiguous and/or do not satisfy the first condition includes the following cases:

The subband 2 is non-contiguous but satisfies the first condition, and the subband 3 is non-contiguous but satisfies the first condition.

The subband 2 is contiguous but does not satisfy the first condition, and the subband 3 is non-contiguous but satisfies the first condition.

The subband 2 is contiguous but does not satisfy the first condition, and the subband 3 is contiguous but does not satisfy the first condition.

The subband 2 is non-contiguous but satisfies the first condition, and the subband 3 is contiguous but does not satisfy the first condition.

The subband 2 is non-contiguous and does not satisfy the first condition, and the subband 3 is non-contiguous but satisfies the first condition.

The subband 2 is non-contiguous and does not satisfy the first condition, and the subband 3 is contiguous but does not satisfy the first condition.

The subband 2 is non-contiguous and does not satisfy the first condition, and the subband 3 is non-contiguous and does not satisfy the first condition.

The subband 2 is non-contiguous but satisfies the first condition, and the subband 3 is non-contiguous and does not satisfy the first condition.

The subband 2 is contiguous but does not satisfy the first condition, and the subband 3 is non-contiguous and does not satisfy the first condition.

By determining the PRG size of the first DL subband through the above method, the PRG size of the first DL subband may be determined as wideband whenever possible. Configuring a large PRG in the first DL subband improves channel estimation performance. In addition, PRG sizes of all DL subbands in the DL BWP may be determined in a same manner, for example, all are wideband or all are configured values, to reduce implementation complexity.

Case 1-3: The PRG size of the first DL subband is determined based on scheduled PRBs in each DL subband in the DL BWP.

In some embodiments, in a case where the scheduled PRBs in each DL subband in the DL BWP are contiguous and satisfy the first condition, the terminal device determines that the PRG size of the first DL subband is the quantity of scheduled PRBs in the first DL subband. For example, in FIG. 3, in a case where the subband 2 is the first DL subband, scheduled PRBs in the subband 2 are contiguous and satisfy the first condition, and scheduled PRBs in the subband 3 are contiguous and satisfy the first condition, the terminal device determines that a PRG size of the subband 2 is a quantity of scheduled PRBs in the subband 2.

In some embodiments, in a case where scheduled PRBs in any DL subband in the DL BWP are non-contiguous and/or do not satisfy the first condition, the terminal device determines that the PRG size of the first DL subband is a configured value. In other words, in a case where scheduled PRBs in at least one DL subband in the DL BWP are non-contiguous and/or do not satisfy the first condition, the terminal device determines that the PRG size of the first DL subband is the configured value. For example, in FIG. 3, in a case where the subband 2 is the first DL subband and the scheduled PRBs in any one of the subband 2 and the subband 3 are non-contiguous and/or do not satisfy the first condition, the terminal device determines that the PRG size of the subband 2 is the configured value.

By determining the PRG size of the first DL subband through the above method, PRG sizes of all DL subbands in the DL BWP can be determined in a same manner, for example, all are wideband or all are configured values, to reduce implementation complexity.

Case 2: Determination of the PRG size of the DL BWP

Case 2-1: The PRG size of the DL BWP is determined based on scheduled PRBs in each DL subband in the DL BWP.

In some embodiments, in a case where the scheduled PRBs in each DL subband in the DL BWP are contiguous and satisfy the first condition, the terminal device determines that the PRG size of the DL BWP is the quantity of scheduled PRBs in the DL BWP. The quantity of scheduled PRBs in the DL BWP is a sum of quantities of scheduled PRBs in all DL subbands in the DL BWP. For example, in FIG. 3, in a case where scheduled PRBs in each of the subband 2 and the subband 3 are contiguous and satisfy the first condition, the terminal device determines that the PRG size of the DL BWP is a sum of the number of scheduled PRBs in the subband 2 and the subband 3.

In some embodiments, in a case where scheduled PRBs in any DL subband in the DL BWP are non-contiguous and/or do not satisfy the first condition, the terminal device determines that the PRG size of the DL BWP is a configured value. For example, in FIG. 3, in a case where the scheduled PRBs in the subband 2 are non-contiguous and/or do not satisfy the first condition, the terminal device determines that the PRG size of the DL BWP is the configured value. in a case where the scheduled PRBs in the subband 3 are non-contiguous and/or do not satisfy the first condition, the terminal device determines that the PRG size of the DL BWP is the configured value.

In the above method, the PRG size of the DL BWP is determined based on the scheduled PRBs in each DL subband in the DL BWP, such that the PRG size of the DL BWP may also be determined as wideband, to improve channel estimation performance.

Case 2-2: The PRG size of the DL BWP is determined based on scheduled PRBs in any DL subband in the DL BWP.

In some embodiments, in a case where the scheduled PRBs in any DL subband in the DL BWP are contiguous and satisfy the first condition, the terminal device determines that the PRG size of the DL BWP is the quantity of scheduled PRBs in the DL BWP. For example, in FIG. 3, in a case where scheduled PRBs in any DL subband in the subband 2 and the subband 3 are contiguous and satisfy the first condition, the terminal device determines that the PRG size of the DL BWP is the quantity of scheduled PRBs in the DL BWP. The quantity of scheduled PRBs in the DL BWP is a sum of a quantity of scheduled PRBs in the subband 2 and a quantity of scheduled PRBs in the subband 3. For example, in a case where the scheduled PRBs in the subband 2 are contiguous and satisfy the first condition and the scheduled PRBs in the subband 3 are non-contiguous and/or do not satisfy the first condition, the terminal device determines that the PRG size of the DL BWP is the quantity of scheduled PRBs in the DL BWP. For another example, in a case where the scheduled PRBs in the subband 3 are contiguous and satisfy the first condition and the scheduled PRBs in the subband 2 are non-contiguous and/or do not satisfy the first condition, the terminal device determines that the PRG size of the DL BWP is the quantity of scheduled PRBs in the DL BWP.

In some embodiments, in a case where scheduled PRBs in each DL subband in the DL BWP are non-contiguous and/or do not satisfy the first condition, the terminal device determines that the PRG size of the DL BWP is a configured value. For example, in FIG. 3, in a case where the scheduled PRBs in each of the subband 2 and the subband 3 are non-contiguous and/or do not satisfy the first condition, the terminal device determines that the PRG size of the DL BWP is the configured value.

In the above method, the PRG size of the DL BWP is determined based on the scheduled PRBs in any DL subband in the DL BWP, such that the PRG size of the DL BWP may also be determined as wideband, to improve channel estimation performance.

Case 2-3: The PRG size of the DL BWP is determined based on PRG sizes of all DL subbands in the DL BWP.

In some embodiments, the terminal device first determines the PRG sizes of all DL subbands in the DL BWP, and then determines a sum of the PRG sizes of all DL subbands as the PRG size of the DL BWP. For example, in FIG. 3, the subband 1 is configured as a UL subband, and the terminal device first determines PRG sizes of the subband 2 and the subband 3, and then determines a sum of the PRG sizes of the subband 2 and the subband 3 as the PRG size of the DL BWP.

In some embodiments, the terminal device first determines the PRG sizes of all DL subbands in the DL BWP, and then determines an average value of the PRG sizes of all DL subbands as the PRG size of the DL BWP. For example, in FIG. 3, the subband 1 is configured as a UL subband, and the terminal device first determines the PRG sizes of the subband 2 and the subband 3, and then determines an average value of the PRG sizes of the subband 2 and the subband 3 as the PRG size of the DL BWP.

In the above method, the PRG size of the DL BWP is determined based on the PRG sizes of all DL subbands in the DL BWP. After the PRG sizes of all DL subbands are determined, the PRG size of the DL BWP may be determined. The PRG size of the DL BWP does not need to be determined separately for the DL BWP such that the solution is simpler to implement.

In some embodiments, in a case where the DL BWP includes a plurality of DL subbands, the plurality of DL subbands use same precoding, or the plurality of DL subbands use independent precoding.

In some embodiments, that the plurality of DL subbands use the same precoding means that PRGs in the plurality of DL subbands use the same precoding, that is, use a same channel shaping strategy, and correspondingly, also use a same channel estimation strategy. This can reduce channel estimation complexity.

In some embodiments, that the plurality of DL subbands use independent precoding means that precoding is independently determined for the plurality of DL subbands. The precoding independently determined for the plurality of DL subbands may be the same or different. This is not limited in the present disclosure. Independently determining precoding for each DL subband enables optimal channel shaping in each DL subband.

In some embodiments, in a case where the DL BWP includes a plurality of DL subbands, and PRG sizes of all DL subbands are determined as wideband, the plurality of DL subbands use same precoding, or the plurality of DL subbands use independent precoding.

In the technical solutions according to the embodiments of the present disclosure, the terminal device determines the PRG size of the DL BWP or a PRG size of a DL subband in the DL BWP based on whether the scheduled PRBs in each DL subband in the DL BWP are contiguous and whether the quantity of scheduled PRBs satisfies the first condition. In a case where scheduled PRBs in at least one DL subband in the DL BWP are contiguous and satisfy the first condition, the terminal device determines that the PRG size of the first DL subband is wideband (namely, the quantity of scheduled PRBs in the first DL subband) or that the PRG size of the DL BWP is wideband (namely, the quantity of scheduled PRBs in the DL BWP). In this way, in a case where scheduled DL resources in the DL BWP are non-contiguous due to a configured UL subband, a large PRG (that is, the PRG size is wideband) may still be configured for the DL subband or the DL BWP, such that channel estimation performance is improved.

In some embodiments, the first condition includes any one of the following items:
The quantity of scheduled PRBs in the DL BWP is greater than half of a bandwidth of the DL BWP.

The quantity of scheduled PRBs in the DL BWP is greater than half of a sum of bandwidths of all DL subbands in the DL BWP.

The quantity of scheduled PRBs in the first DL subband is greater than half of the bandwidth of the DL BWP.

The quantity of scheduled PRBs in the first DL subband is greater than half of a sum of bandwidths of all DL subbands in the DL BWP.

The quantity of scheduled PRBs in the first DL subband is greater than half of a bandwidth of the first DL subband.

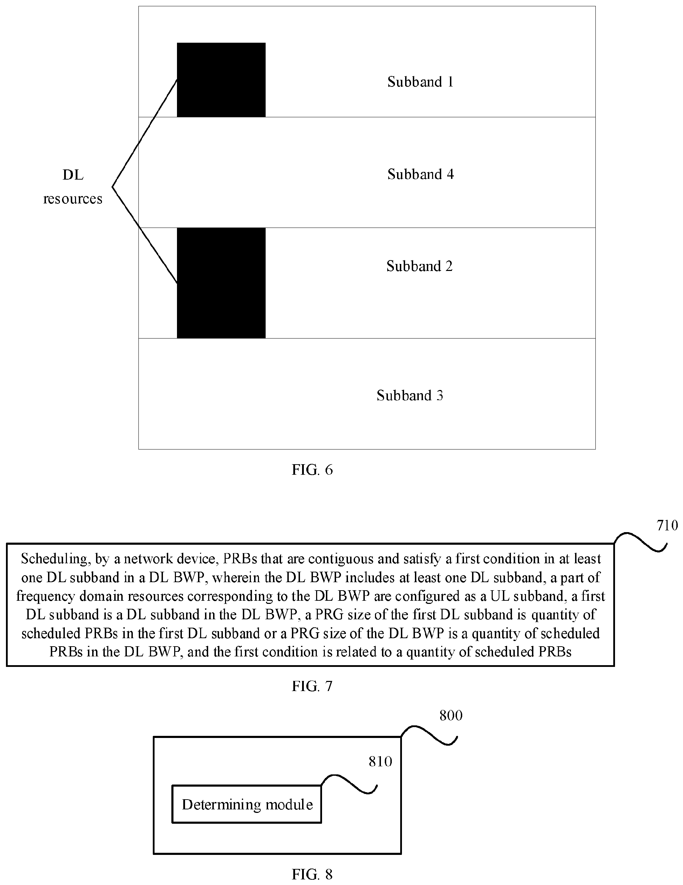

The quantity of scheduled PRBs in the DL BWP is the sum of the quantities of scheduled PRBs in all DL subbands in the DL BWP. The bandwidth of the DL BWP is a sum of the bandwidths of all DL subbands and a bandwidth of the configured UL subband in the DL BWP. For example, in FIG. 6, a subband 1, a subband 2, and a subband 3 are DL subbands, and a subband 4 is a UL subband. The quantity of scheduled PRBs in the DL BWP is a sum of a quantity of scheduled PRBs in the subband 1 and a quantity of scheduled PRBs in the subband 2. The bandwidth of the DL BWP is a sum of bandwidths of the subband 1, the subband 2, the subband 3, and the subband 4. The bandwidths of all DL subbands in the DL BWP is a sum of the bandwidths of the subband 1, the subband 2, and the subband 3.

For example, in FIG. 6, in a case where the subband 1 is the first DL subband, that the quantity of scheduled PRBs in the DL BWP is greater than half of the bandwidth of the DL BWP means that the sum of the quantities of scheduled PRBs in the subband 1 and the subband 2 is greater than half of the sum of the bandwidths of the subband 1, the subband 2, the subband 3, and the subband 4. That the quantity of scheduled PRBs in the DL BWP is greater than half of the sum of the bandwidths of all DL subbands in the DL BWP means that the sum of the quantities of scheduled PRBs in the subband 1 and the subband 2 is greater than half of the sum of the bandwidths of the subband 1, the subband 2, and the subband 3. That the quantity of scheduled PRBs in the first DL subband is greater than half of the bandwidth of the DL BWP means that the quantity of scheduled PRBs in the subband 1 is greater than half of the sum of the bandwidths of the subband 1, the subband 2, the subband 3, and the subband 4. That the quantity of scheduled PRBs in the first DL subband is greater than half of the sum of the bandwidths of all DL subbands in the DL BWP means that the quantity of scheduled PRBs in the subband 1 is greater than half of the sum of the bandwidths of the subband 1, the subband 2, and the subband 3. That the quantity of scheduled PRBs in the first DL subband is greater than half of the bandwidth of the first DL subband means that the quantity of scheduled PRBs in the subband 1 is greater than half of the bandwidth of the subband 1.

The first condition is applicable to process 410 and various cases in Case 1 and Case 2 included in the above embodiments. For a case in which scheduled PRBs in at least one DL subband in the DL BWP are contiguous and satisfy the first condition, an example in which the scheduled PRBs in the first DL subband are contiguous and satisfy the first condition is used for description below.

That the scheduled PRBs in the first DL subband are contiguous and satisfy the first condition means that the scheduled PRBs in the first DL subband are contiguous, but the first condition is not necessarily for the first DL subband. With reference to the description of the first condition in the above embodiments, the first condition may be for the DL BWP or for the first DL subband.

In some embodiments, in a case where the first condition is that the quantity of scheduled PRBs in the DL BWP is greater than half of the bandwidth of the DL BWP, that the scheduled PRBs in the first DL subband are contiguous and satisfy the first condition should be understood as that the scheduled PRBs in the first DL subband are contiguous and the quantity of scheduled PRBs in the DL BWP is greater than half of the bandwidth of the DL BWP. For example, in FIG. 3, in a case where the subband 2 is the first DL subband, that the scheduled PRBs in the first DL subband are contiguous and satisfy the first condition may be understood as that the scheduled PRBs in the subband 2 are contiguous and a total quantity of scheduled PRBs in the subband 2 and the subband 3 is greater than half of the bandwidth of the DL BWP.

In some embodiments, in a case where the first condition is that the quantity of scheduled PRBs in the DL BWP is greater than half of the sum of the bandwidths of all DL subbands in the DL BWP, that the scheduled PRBs in the first DL subband are contiguous and satisfy the first condition should be understood as that the scheduled PRBs in the first DL subband are contiguous and the quantity of scheduled PRBs in the DL BWP is greater than half of the sum of the bandwidths of all DL subbands in the DL BWP. For example, in FIG. 3, in a case where the subband 2 is the first DL subband, that the scheduled PRBs in the first DL subband are contiguous and satisfy the first condition may be understood as that the scheduled PRBs in the subband 2 are contiguous and the total quantity of scheduled PRBs in the subband 2 and the subband 3 is greater than half of a sum of bandwidths of the subband 2 and the subband 3.

In some embodiments, in a case where the first condition is that the quantity of scheduled PRBs in the first DL subband is greater than half of the bandwidth of the DL BWP, that the scheduled PRBs in the first DL subband are contiguous and satisfy the first condition should be understood as that the scheduled PRBs in the first DL subband are contiguous and the quantity of scheduled PRBs in the first DL subband is greater than half of the bandwidth of the DL BWP. For example, in FIG. 3, in a case where the subband 2 is the first DL subband, that the scheduled PRBs in the first DL subband are contiguous and satisfy the first condition may be understood as that the scheduled PRBs in the subband 2 are contiguous and the quantity of scheduled PRBs in the subband 2 is greater than half of the bandwidth of the DL BWP.

In some embodiments, in a case where the first condition is that the quantity of scheduled PRBs in the first DL subband is greater than half of the sum of the bandwidths of all DL subbands in the DL BWP, that the scheduled PRBs in the first DL subband are contiguous and satisfy the first condition should be understood as that the scheduled PRBs in the first DL subband are contiguous and the quantity of scheduled PRBs in the first DL subband is greater than half of the sum of the bandwidths of all DL subbands in the DL BWP. For example, in FIG. 3, in a case where the subband 2 is the first DL subband, that the scheduled PRBs in the first DL subband are contiguous and satisfy the first condition may be understood as that the scheduled PRBs in the subband 2 are contiguous and the quantity of scheduled PRBs in the subband 2 is greater than half of the sum of the bandwidths of the subband 2 and the subband 3.

In some embodiments, in a case where the first condition is that the quantity of scheduled PRBs in the first DL subband is greater than half of the bandwidth of the first DL subband, that the scheduled PRBs in the first DL subband are contiguous and satisfy the first condition should be understood as that the scheduled PRBs in the first DL subband are contiguous and the quantity of scheduled PRBs in the first DL subband is greater than half of the bandwidth of the first DL subband. For example, in FIG. 3, in a case where the subband 2 is the first DL subband, that the scheduled PRBs in the first DL subband are contiguous and satisfy the first condition may be understood as that the scheduled PRBs in the subband 2 are contiguous and the quantity of scheduled PRBs in the subband 2 is greater than half of the bandwidth of the subband 2.

In some embodiments, prior to process 410, the terminal device receives first configuration information from the network device. The first configuration information is configured to indicate the PRG size of the DL BWP or to indicate a PRG size of at least one DL subband in the DL BWP.

In some embodiments, the first configuration information may be dynamic configuration information or semi-static configuration information. This is not limited in the present disclosure. In some embodiments, in a case where the first configuration information is semi-static configuration information, the first configuration information may be configured by a higher layer of the network device. For example, the first configuration information is radio resource control (RRC) signaling. In some embodiments, in a case where the first configuration information is dynamic configuration information, the first configuration information may be configured by a physical layer of the network device. For example, the first configuration information is downlink control information (DCI). The higher layer is a layer above the physical layer, such as an application layer or an RRC layer.

In some embodiments, in a case where the first configuration information is semi-static configuration information, the terminal device receives the first configuration information from the network device prior to receiving data transmitted on DL resources in the DL BWP.

In some embodiments, in a case where the first configuration information is dynamic configuration information, the terminal device may receive the first configuration information from the network device while receiving data transmitted on DL resources in the DL BWP. For example, the DCI includes the first configuration information and configuration information of the scheduled PRBs in the DL BWP.

In some embodiments, the first configuration information is configured to indicate at least one of a first parameter, a second parameter, or a third parameter. The first parameter is a configured value, the second parameter is wideband, and the third parameter is the configured value and wideband.

It should be noted that in a case where the first configuration information is configured to indicate the third parameter, the first configuration information indicates both the configured value and wideband, but the terminal device needs to select one of the configured value and wideband to determine as the PRG size.

In some embodiments, the configured value may be predefined or preconfigured, or configured by the network device. This is not limited in the present disclosure. A magnitude of the configured value is not limited in the present disclosure. In some embodiments, the configured value may be 2 or 4.

In some embodiments, in a case where the first configuration information for the first DL subband indicates the first parameter, the terminal device determines that the PRG size of the first DL subband is the configured value. For example, in a case where the first configuration information indicates that the configured value for the first DL subband is 2, the terminal device determines that the PRG size of the first DL subband is 2. For example, in a case where the first configuration information indicates that the configured value for the first DL subband is 4, the terminal device determines that the PRG size of the first DL subband is 4.

In some embodiments, in a case where the first configuration information for the first DL subband indicates the second parameter, the terminal device determines that the PRG size of the first DL subband is the quantity of scheduled PRBs in the first DL subband.

In some embodiments, in a case where the first configuration information for the first DL subband indicates the third parameter, the terminal device performs process 410, that is, the terminal device determines the PRG size of the first DL subband based on scheduled PRBs in at least one DL subband in the DL BWP. For example, for Case 1-2 in Case 1 above, the first configuration information indicates "n2-wideband" (representing that the PRG size of the first DL subband is the configured value of 2 or wideband) and scheduled PRBs in at least one DL subband in the DL BWP are contiguous and satisfy the first condition, the PRG size of the first DL subband is determined to be the quantity of scheduled PRBs in the first DL subband. For example, the first configuration information indicates "n4-wideband" (representing that the PRG size of the first DL subband is the configured value of 4 or wideband) and scheduled PRBs in at least one DL subband in the DL BWP are contiguous and satisfy the first condition, the PRG size of the first DL subband is determined to be the quantity of scheduled PRBs in the first DL subband. Certainly, the PRG size of the first DL subband may alternatively be determined by using Case 1-1 and Case 1-3 in Case 1 above. Details are not described herein.

In the above method, the terminal device needs to perform process 410 only when the network device configures two values for the PRG size of the first DL subband or DL BWP. This can ensure that the terminal device and the network device use the same PRG size such that the terminal device is capable of determining a channel estimation strategy based on a shaping strategy used by the network device, to improve channel estimation performance.

In some embodiments, in a case where the PRG size of the first DL subband is configured as wideband, the terminal device does not expect to be scheduled with non-contiguous PRBs in the first DL subband. That is, the terminal device expects the scheduled PRBs in the first DL subband to be contiguous. In this case, the network device is expected to schedule contiguous PRBs in the first DL subband, or the network device is not expected to schedule non-contiguous PRBs in the first DL subband.

In some embodiments, in a case where scheduled PRBs in at least one DL subband in the DL BWP are contiguous, the terminal device determines that the PRG size of the first DL subband is the quantity of scheduled PRBs in the first DL subband or that the PRG size of the DL BWP is the quantity of scheduled PRBs in the DL BWP.

For example, in FIG. 3, assuming that the subband 2 is the first DL subband, in a case where the scheduled PRBs in the subband 2 are contiguous, the terminal device determines that the PRG size of the subband 2 is the quantity of scheduled PRBs in the subband 2; or in a case where the scheduled PRBs in the subband 3 are contiguous, the terminal device determines that the PRG size of the subband 2 is the quantity of scheduled PRBs in the subband 2.

For example, in FIG. 3, in a case where the scheduled PRBs in the subband 2 are contiguous, the terminal device determines that the PRG size of the DL BWP is the sum of the quantities of scheduled PRBs in the subband 2 and the subband 3; or in a case where the scheduled PRBs in the subband 3 are contiguous, the terminal device determines that the PRG size of the DL BWP is the sum of the quantities of scheduled PRBs in the subband 2 and the subband 3.

In some embodiments, in a case where the PRG size of the DL BWP is configured as wideband, the terminal device does not expect to be scheduled with non-contiguous PRBs in any DL subband in the DL BWP. That is, the terminal device expects the scheduled PRBs in each DL subband in the DL BWP to be contiguous.

For example, in a case where the PRG size $P'_{BWP,i}$ of the DL BWP is configured as wideband, the scheduled PRBs in each DL subband in the DL BWP are contiguous.

In a case where $P'_{BWP,i}$ is determined as "wideband", the UE is not expected to be scheduled with non-contiguous PRBs in each DL subband and the UE may assume that the same precoding is applied to the allocated resource associated with a same Transmission Configuration Indication (TCI) state or a same Quasi Co-Location (QCL) assumption.

In a case where the DL BWP includes a plurality of DL subbands, a PRG size is not configured separately for one DL subband, such as configuring the PRG size of the first DL subband as wideband and the PRG size of the second DL subband as a configured value. Instead, PRG sizes of all DL subbands in the DL BWP are uniformly configured, to reduce implementation complexity and avoid that the network device uses a plurality of shaping strategies and that the terminal device uses a plurality of channel estimation strategies. Certainly, a PRG size may alternatively be configured separately for each DL subband, enabling optimal channel shaping and channel estimation in each DL subband.

In some embodiments, the DL BWP includes a plurality of DL subbands. The present disclosure further provides exemplary embodiments of how to determine PRG sizes of the plurality of DL subbands.

In some embodiments, in a case where the DL BWP includes a plurality of DL subbands, PRG sizes of the plurality of DL subbands are determined in a same manner.

In some embodiments, in a case where at least one of the plurality of DL subbands is determined to use a wideband mode, the PRG size of each of the plurality of DL subbands is a quantity of scheduled PRBs in the each of the plurality of DL subbands.

For example, in FIG. 3, in a case where the subband 2 is determined to use the wideband mode, the PRG size of the subband 2 is determined as the quantity of scheduled PRBs in the subband 2, and the PRG size of the subband 3 is determined as the quantity of scheduled PRBs in the subband 3. Because the quantities of scheduled PRBs in the subbands are not necessarily the same, the finally determined PRG sizes of the DL subbands are not necessarily the same.

In some embodiments, in a case where at least one of the plurality of DL subbands is determined to use a configured value, the PRG size of each of the plurality of DL subbands is a configured value corresponding to the DL subband.

For example, in FIG. 3, in a case where the subband 2 is determined to use a configured value, the PRG size of the subband 2 is determined as the configured value, and the PRG size of the subband 3 is determined as a configured value.

In some embodiments, configured values for different DL subbands may be the same or different. This is not limited in the present disclosure. For example, the configured value for the subband 2 is 2, and the configured value for the subband 3 is 4. To reduce implementation complexity, configured values for all DL subbands are usually determined to be the same.

In some embodiments, in a case where the DL BWP includes a plurality of DL subbands, PRG sizes of the plurality of DL subbands are determined independently.

For example, in FIG. 3, in a case where the scheduled PRBs in the subband 2 are contiguous and satisfy the first condition, the PRG size of the subband 2 is determined to be the quantity of scheduled PRBs in the subband 2; and in a case where the scheduled PRBs in the subband 3 are non-contiguous and/or do not satisfy the first condition, the PRG size of the subband 3 is determined to be a configured value. A status of the scheduled PRBs in the subband 2 does not affect how the PRG size of the subband 3 is determined.

Independently determining the PRG sizes of the plurality of DL subbands enables optimal channel estimation and channel shaping in each DL subband.

The present disclosure further provides several embodiments of the above method for determining a PRG.

In an example, in a case where "bundling size indicator" (namely the PRG size) is indicated as 1 in DCI and two values are configured for $P'_{BWP,i}$, such as "n2-wideband" (two $P'_{BWP,i}$ values: 2 and wideband) or "n4-wideband" (two $P'_{BWP,i}$ values: 4 and wideband), the terminal device uses the value when receiving a PDSCH scheduled by the DCI as follows:

In a case where the scheduled PRBs in each DL subband are contiguous and a quantity of scheduled PRBs in at least one DL subband is greater than $N^{size}_{Dlsubband,i}/2$, wherein $N^{size}_{Dlsubband,i}$ is a bandwidth of a current DL subband, $P'_{BWP,i}$ is a quantity of scheduled PRBs in a current DL BWP. Otherwise, $P'_{BWP,i}$ is set to a configured value, for example, 2 or 4.

For example, the above content may be expressed as follows:

If the PRB 'bundling size indicator' signalled in DCI format 1_1:

is set to '0', the UE shall use the $P'_{BWP,i}$ value from the second set of $P'_{BWP,i}$ values when receiving PDSCH scheduled by the same DCI.

is set to '1' and one value is configured for the first set of $P'_{BWP,i}$ values, the UE shall use this value when receiving PDSCH scheduled by the same DCI.

is set to '1' and two values are configured for the first set of $P'_{BWP,i}$ values as 'n2-wideband' (corresponding to two $P'_{BWP,i}$ values 2 and wideband) or 'n4-wideband' (corresponding to two $P'_{BWP,i}$ values 4 and wideband), the UE shall use the value when receiving PDSCH scheduled by the same DCI as follows:

If the scheduled PRBs are contiguous in each DL subband and the size of the scheduled PRBs in at least one DL subband is larger than

$N^{size}_{Dlsubband,i}/2$, $N^{size}_{Dlsubband,i}$ is bandwidth of the DL subband. $P'_{BWP,i}$ is the same as the scheduled bandwidth in each DL subband, otherwise is set to the remaining configured value of 2 or 4, respectively.

In another example, in a case where "bundling size indicator" is indicated as 1 in DCI and two values are configured for $P'_{BWP,i}$, such as "n2-wideband" (two $P'_{BWP,i}$ values: 2 and wideband) or "n4-wideband" (two $P'_{BWP,i}$ values: 4 and wideband), the terminal device uses the value when receiving a PDSCH scheduled by the DCI as follows:

In a case where the scheduled PRBs in each DL subband are contiguous and a quantity of scheduled PRBs in all DL subbands is greater than $N^{size}_{Dlsubband,total}/2$, wherein $N^{size}_{Dlsubband,total}$ is a sum of bandwidths of all DL subbands, $P'_{BWP,i}$ is a quantity of scheduled PRBs in a current DL BWP. Otherwise, $P'_{BWP,i}$ is set to a configured value, for example, 2 or 4.

For example, the above content may be expressed as follows:

If the PRB 'bundling size indicator' signalled in DCI format 1_1:

is set to '0', the UE shall use the $P'_{BWP,i}$ value from the second set of values when receiving PDSCH scheduled by the same DCI.

is set to '1' and one value is configured for the first set of $P'_{BWP,i}$ values, the UE shall use this value when receiving PDSCH scheduled by the same DCI.

is set to '1' and two values are configured for the first set of $P'_{BWP,i}$ values as 'n2-wideband' (corresponding to two $P'_{BWP,i}$ values 2 and wideband) or 'n4-wideband' (corresponding to two $P'_{BWP,i}$ values 4 and wideband), the UE shall use the value when receiving PDSCH scheduled by the same DCI as follows:

If the scheduled PRBs are contiguous in each DL subband and the size of the scheduled PRBs is larger than $N^{size}_{Dlsubband,total}/2$, $N^{size}_{Dlsubband,total}$ is total bandwidth of all DL subband. $P'_{BWP,i}$ is the same as the scheduled bandwidth, otherwise $P'_{BWP,i}$ is set to the remaining configured value of 2 or 4, respectively.

FIG. 7 is a flowchart of a method for scheduling a PRB according to some embodiments of the present disclosure. The method is performed by a network device. The method may include process 710.

In process 710, the network device schedules PRBs that are contiguous and satisfy a first condition in at least one DL subband in a DL BWP. The DL BWP includes at least one DL subband. A part of frequency domain resources corresponding to the DL BWP are configured as a UL subband. A first DL subband is a DL subband in the DL BWP. A PRG size of the first DL subband is a quantity of scheduled PRBs in the first DL subband, or a PRG size of the DL BWP is a quantity of scheduled PRBs in the DL BWP. The first condition is related to a quantity of scheduled PRBs.

In some embodiments, the network device first determines the PRG size of the first DL subband or the PRG size of the DL BWP, and then schedules PRBs in at least one DL subband in the DL BWP based on the PRG size of the first DL subband or the PRG size of the DL BWP.

In some embodiments, the first condition includes any one of the following items:

The quantity of scheduled PRBs in the DL BWP is greater than half of a bandwidth of the DL BWP.

The quantity of scheduled PRBs in the DL BWP is greater than half of a sum of bandwidths of all DL subbands in the DL BWP.

The quantity of scheduled PRBs in the first DL subband is greater than half of the bandwidth of the DL BWP.

The quantity of scheduled PRBs in the first DL subband is greater than half of a sum of bandwidths of all DL subbands in the DL BWP.

The quantity of scheduled PRBs in the first DL subband is greater than half of a bandwidth of the first DL subband.

Similarly, for the understanding that the network device schedules the PRBs that are contiguous and satisfy the first condition in the at least one DL subband in the DL BWP, reference should be made to the understanding that the scheduled PRBs in the first DL subband are contiguous and satisfy the first condition in the above method for determining a PRG. Details are not described herein again.

In some embodiments, process 710 may include two aspects: scheduling of PRBs in the first DL subband and scheduling of PRBs in the DL BWP. The following describes the two aspects.

1. Scheduling of the PRBs in the first DL subband

(1) The PRBs in the first DL subband are scheduled based on the PRG size of the first DL subband.

In some embodiments, in a case where the PRG size of the first DL subband is configured as wideband, PRBs that are contiguous and satisfy the first condition are scheduled in the first DL subband. For example, as illustrated in FIG. 3, in a case where the PRG size of the subband 2 is configured as wideband, PRBs that are contiguous and satisfy the first condition are scheduled in the subband 2.

In some embodiments, in a case where the PRG size of the first DL subband is a configured value, PRBs are scheduled in the first DL subband based on the configured value. In this case, the scheduled PRBs in the first DL subband may be non-contiguous and/or not satisfy the first condition, or may be contiguous and satisfy the first condition. For example, as illustrated in FIG. 3, in a case where the PRG size of the subband 2 is configured as a configured value of 2, PRBs are scheduled in the subband 2 with a PRG size of 2.

(2) The PRBs in the first DL subband are scheduled based on the PRG size of the DL BWP.

In some embodiments, in a case where the PRG size of the DL BWP is configured as wideband, the PRBs that are contiguous and satisfy the first condition are scheduled in the first DL subband. For example, as illustrated in FIG. 3, in a case where the subband 2 is the first DL subband and the PRG size of the DL BWP is configured as wideband, PRBs that are contiguous and satisfy the first condition are scheduled in the subband 2.

In some embodiments, in a case where the PRG size of the DL BWP is configured as a configured value, PRBs are scheduled in the first DL subband based on the configured value. For example, as illustrated in FIG. 3, in a case where the subband 2 is the first DL subband and the PRG size of the DL BWP is configured as a configured value of 2, PRBs are scheduled in the subband 2 with a PRG size of 2.

2. Scheduling of the PRBs in the DL BWP

(1) The PRBs in the DL BWP are scheduled based on a PRG size of any DL subband in the DL BWP.

In some embodiments, in a case where the PRG size of the first DL subband is configured as wideband, PRBs that are contiguous and satisfy the first condition are scheduled in at least one DL subband in the DL BWP. For example, as illustrated in FIG. 3, in a case where the PRG size of the subband 2 is configured as wideband, PRBs that are contiguous and satisfy the first condition are scheduled in the subband 2 and the subband 3.

In some embodiments, in a case where the PRG size of the first DL subband is a configured value, PRBs are scheduled in each DL subband in the DL BWP based on the configured value. For example, as illustrated in FIG. 3, in a case where the PRG size of the subband 2 is configured as a configured value of 4, PRBs are scheduled in the subband 2 and the subband 3 with a PRG size of 4.

(2) The PRBs in the DL BWP are scheduled based on the PRG size of the DL BWP.

In some embodiments, in a case where the PRG size of the DL BWP is configured as wideband, PRBs that are contiguous and satisfy the first condition are scheduled in each DL subband in the DL BWP. For example, as illustrated in FIG. 3, in a case where the PRG size of the DL BWP is configured as wideband, PRBs that are contiguous and satisfy the first condition are scheduled in the subband 2 and the subband 3.

In some embodiments, in a case where the PRG size of the DL BWP is a configured value, PRBs are scheduled in at least one DL subband in the DL BWP based on the configured value. For example, as illustrated in FIG. 3, in a case where the PRG size of the DL BWP is configured as a configured value of 2, PRBs are scheduled in the subband 2 and/or the subband 3 with a PRG size of 2.

(3) The PRBs in each DL subband in the DL BWP are scheduled based on the PRG size of the DL BWP.

In some embodiments, in a case where the PRG size of the DL BWP is configured as wideband, PRBs that are contiguous and satisfy the first condition are scheduled in at least one DL subband in the DL BWP. For example, as illustrated in FIG. 3, in a case where the PRG size of the DL BWP is configured as wideband, PRBs that are contiguous and satisfy the first condition are scheduled in the subband 2 and/or the subband 3.

In some embodiments, in a case where the PRG size of the DL BWP is a configured value, PRBs are scheduled in each DL subband in the DL BWP based on the configured value. For example, as illustrated in FIG. 3, in a case where the PRG size of the DL BWP is configured as a configured value of 2, PRBs are scheduled in the subband 2 and the subband 3 with a PRG size of 2.

In some embodiments, in a case where the PRG size of the first DL subband is configured as wideband, the network device does not expect to schedule non-contiguous PRBs in the first DL subband. That is, in a case where the PRG size of the first DL subband is configured as wideband, the network device expects to schedule contiguous PRBs in the first DL subband.

In some embodiments, contiguous PRBs are scheduled in at least one DL subband in the DL BWP based on the PRG size of the first DL subband or the PRG size of the DL BWP.

In some embodiments, in a case where the PRG size of the DL BWP is configured as wideband, the network device is not expected to schedule non-contiguous PRBs in any DL subband in the DL BWP. That is, in a case where the PRG size of the DL BWP is configured as wideband, the network device expects to schedule contiguous PRBs in any DL subband in the DL BWP.

In some embodiments, in a case where the DL BWP includes a plurality of DL subbands, PRG sizes of the plurality of DL subbands are determined in a same manner. In other words, the PRG sizes of the plurality of DL subbands are uniformly configured.

In some embodiments, the PRG sizes of the plurality of DL subbands are configured as wideband.

In some embodiments, the PRG sizes of the plurality of DL subbands are configured as configured values.

For example, in FIG. 3, the subband 2 and the subband 3 are both configured as wideband; or the subband 2 and the subband 3 are both configured as configured values.

In some embodiments, in a case where the DL BWP includes a plurality of DL subbands, PRG sizes of the plurality of DL subbands are determined independently. In other words, the PRG sizes of the plurality of DL subbands are separately configured. The independently determined PRG sizes of the DL subbands may be the same or different. This is not limited in the present disclosure. For example, in FIG. 3, the subband 2 is independently configured as wideband, and the subband 3 is independently configured as wideband. Alternatively, the subband 2 is independently configured as a configured value, and the subband 3 is independently configured as a configured value. Alternatively, the subband 2 is independently configured as wideband, and the subband 3 is independently configured as a configured value. Alternatively, the subband 2 is independently configured as a configured value, and the subband 3 is independently configured as wideband.

In some embodiments, in a case where the DL BWP includes a plurality of DL subbands, the plurality of DL subbands use same precoding, or the plurality of DL subbands use independent precoding.

In some embodiments, that the plurality of DL subbands use the same precoding means that PRGs in the plurality of DL subbands use the same precoding, that is, use a same channel shaping strategy, and correspondingly, also use a same channel estimation strategy. This can reduce channel estimation complexity.

In some embodiments, that the plurality of DL subbands use independent precoding means that precoding is independently determined for the plurality of DL subbands. The precoding independently determined for the plurality of DL subbands may be the same or different. This is not limited in the present disclosure. Independently determining precoding for each DL subband enables optimal channel shaping in each DL subband.

In the technical solutions according to the embodiments of the present disclosure, the network device schedules PRBs in at least one DL subband in the DL BWP based on the PRG size of the first DL subband or the PRG size of the DL BWP, such that a PRG size of the first DL subband and/or a PRG size of the DL BWP determined by a terminal device is consistent with the PRG size configured by the network device, to ensure channel estimation accuracy.

It should be noted that the method for determining a PRG and the method for scheduling a PRB according to the embodiments of the present disclosure are different implementations of a same concept. For content not described in detail in the method on one side, reference may be made to the embodiments of the method on the other side. Details are not described herein again in the present disclosure.

The following is apparatus embodiments of the present disclosure, which may be used to perform the method embodiments of the present disclosure. For details not disclosed in the apparatus embodiments of the present disclosure, reference may be made to the method embodiments of the present disclosure.

FIG. 8 is a block diagram of an apparatus for determining a PRG according to some embodiments of the present disclosure. The apparatus has a function of implementing the above method for determining a PRG. The function may be implemented by hardware, or may be implemented by hardware executing corresponding software. The apparatus may be the terminal device described above or may be disposed in the terminal device. As illustrated in FIG. 8, the apparatus 800 may include a determining module 810.

The determining module 810 is configured to determine that a PRG size of a first DL subband is a quantity of scheduled PRBs in the first DL subband or that a PRG size of a DL BWP is a quantity of scheduled PRBs in the DL BWP in a case where scheduled PRBs in at least one DL subband in the DL BWP are contiguous and satisfy a first condition.

The first DL subband is a DL subband in the DL BWP. A part of frequency domain resources corresponding to the DL BWP are configured as a UL subband. The first condition is related to a quantity of scheduled PRBs.

In some embodiments, the first condition includes any one of the following items:

The quantity of scheduled PRBs in the DL BWP is greater than half of a bandwidth of the DL BWP.

The quantity of scheduled PRBs in the DL BWP is greater than half of a sum of bandwidths of all DL subbands in the DL BWP.

The quantity of scheduled PRBs in the first DL subband is greater than half of the bandwidth of the DL BWP.

The quantity of scheduled PRBs in the first DL subband is greater than half of a sum of bandwidths of all DL subbands in the DL BWP.

The quantity of scheduled PRBs in the first DL subband is greater than half of a bandwidth of the first DL subband.

In some embodiments, the determining module 810 is configured to: determine that the PRG size of the first DL subband is the quantity of scheduled PRBs in the first DL subband in a case where the scheduled PRBs in the first DL subband are contiguous and satisfy the first condition.

In some embodiments, the determining module 810 is further configured to: determine that the PRG size of the first DL subband is a configured value in a case where the scheduled PRBs in the first DL subband are non-contiguous and/or do not satisfy the first condition.

In some embodiments, the determining module 810 is configured to: determine that the PRG size of the first DL subband is the quantity of scheduled PRBs in the first DL subband in a case where scheduled PRBs in any DL subband in the DL BWP are contiguous and satisfy the first condition.

In some embodiments, the determining module 810 is further configured to: determine that the PRG size of the first DL subband is a configured value in a case where scheduled PRBs in each DL subband in the DL BWP are non-contiguous and/or do not satisfy the first condition.

In some embodiments, the determining module 810 is configured to: determine that the PRG size of the DL BWP is the quantity of scheduled PRBs in the DL BWP in a case where scheduled PRBs in each DL subband in the DL BWP are contiguous and satisfy the first condition.

In some embodiments, the determining module 810 is further configured to: determine that the PRG size of the DL BWP is a configured value in a case where scheduled PRBs in any DL subband in the DL BWP are non-contiguous and/or do not satisfy the first condition.

In some embodiments, the determining module 810 is configured to: determine that the PRG size of the DL BWP is the quantity of scheduled PRBs in the DL BWP in a case where scheduled PRBs in any DL subband in the DL BWP are contiguous and satisfy the first condition.

In some embodiments, the determining module 810 is further configured to: determine that the PRG size of the DL BWP is a configured value in a case where scheduled PRBs in each DL subband in the DL BWP are non-contiguous and/or do not satisfy the first condition.

In some embodiments, in a case where the PRG size of the first DL subband is configured as wideband, the terminal device is not expected to be scheduled with non-contiguous PRBs in the first DL subband.

In some embodiments, the determining module 810 is further configured to: determine that the PRG size of the first DL subband is the quantity of scheduled PRBs in the first DL subband or that the PRG size of the DL BWP is the quantity of scheduled PRBs in the DL BWP in a case where scheduled PRBs in at least one DL subband in the DL BWP are contiguous.

In some embodiments, in a case where the PRG size of the DL BWP is configured as wideband, the terminal device is not expected to be scheduled with non-contiguous PRBs in any DL subband in the DL BWP.

In some embodiments, in a case where the DL BWP includes a plurality of DL subbands, PRG sizes of the plurality of DL subbands are determined in a same manner.

In some embodiments, in a case where at least one of the plurality of DL subbands is determined to use a wideband mode, the PRG size of each of the plurality of DL subbands is a quantity of scheduled PRBs in the each of the plurality of DL subbands.

In some embodiments, in a case where at least one of the plurality of DL subbands is determined to use a configured value, the PRG size of each of the plurality of DL subbands is a configured value corresponding to the each of the plurality of DL subbands.

In some embodiments, in a case where the DL BWP includes a plurality of DL subbands, PRG sizes of the plurality of DL subbands are determined independently.

In some embodiments, in a case where the DL BWP includes a plurality of DL subbands, the plurality of DL subbands use same precoding, or the plurality of DL subbands use independent precoding.

In the technical solutions according to the embodiments of the present disclosure, the terminal device determines the PRG size of the DL BWP or a PRG size of a DL subband in the DL BWP based on whether the scheduled PRBs in each DL subband in the DL BWP are contiguous and whether the quantity of scheduled PRBs satisfies the first condition. In a case where scheduled PRBs in at least one DL subband in the DL BWP are contiguous and satisfy the first condition, the terminal device determines that the PRG size of the first DL subband is wideband (namely, the quantity of scheduled PRBs in the first DL subband) or that the PRG size of the DL BWP is wideband (namely, the quantity of scheduled PRBs in the DL BWP). In this way, in a case where scheduled DL resources in the DL BWP are non-contiguous due to a configured UL subband, a large PRG (that is, the PRG size is wideband) may still be configured for the DL subband or the DL BWP, such that channel estimation performance is improved.

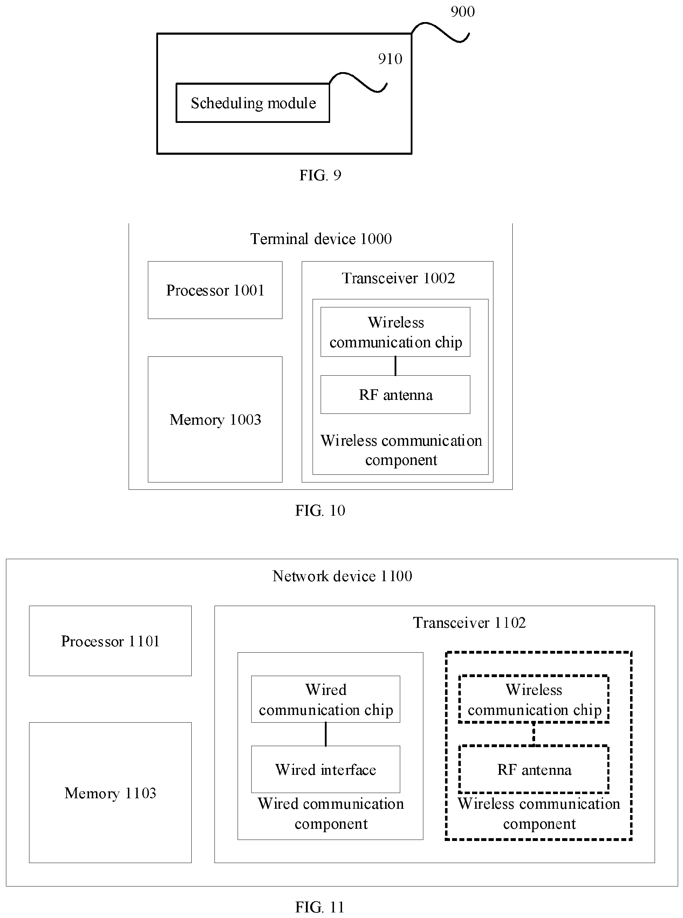

FIG. 9 is a block diagram of an apparatus for scheduling a PRB according to some embodiments of the present disclosure. The apparatus has a function of implementing the above method for scheduling a PRB. The function may be implemented by hardware, or may be implemented by hardware executing corresponding software. The apparatus may be the network device described above or may be disposed in the network device. As illustrated in FIG. 9, the apparatus 900 may include a scheduling module 910.

The scheduling module 910 is configured to schedule PRBs that are contiguous and satisfy a first condition in at least one DL subband in a DL BWP. A part of frequency domain resources corresponding to the DL BWP are configured as a UL subband. A first DL subband is a DL subband in the DL BWP. A PRG size of the first DL subband is a quantity of scheduled PRBs in the first DL subband, or a PRG size of the DL BWP is a quantity of scheduled PRBs in the DL BWP. The first condition is related to a quantity of scheduled PRBs.

In some embodiments, the first condition includes any one of the following items:

The quantity of scheduled PRBs in the DL BWP is greater than half of a bandwidth of the DL BWP.

The quantity of scheduled PRBs in the DL BWP is greater than half of a sum of bandwidths of all DL subbands in the DL BWP.

The quantity of scheduled PRBs in the first DL subband is greater than half of the bandwidth of the DL BWP.

The quantity of scheduled PRBs in the first DL subband is greater than half of a sum of bandwidths of all DL subbands in the DL BWP.

The quantity of scheduled PRBs in the first DL subband is greater than half of a bandwidth of the first DL subband.

In some embodiments, the scheduling module 910 is configured to: schedule PRBs that are contiguous and satisfy the first condition in the first DL subband in a case where the PRG size of the first DL subband is configured as wideband.

In some embodiments, the scheduling module 910 is further configured to: schedule PRBs in the first DL subband based on the configured value in a case where the PRG size of the first DL subband is a configured value.

In some embodiments, the scheduling module 910 is configured to: schedule PRBs that are contiguous and satisfy the first condition in at least one DL subband in the DL BWP in a case where the PRG size of the first DL subband is configured as wideband.

In some embodiments, the scheduling module 910 is further configured to: schedule PRBs in each DL subband in the DL BWP based on the configured value in a case where the PRG size of the first DL subband is a configured value.

In some embodiments, the scheduling module 910 is configured to: schedule PRBs that are contiguous and satisfy the first condition in each DL subband in the DL BWP in a case where the PRG size of the DL BWP is configured as wideband.

In some embodiments, the scheduling module 910 is further configured to: schedule PRBs in at least one DL subband in the DL BWP based on the configured value in a case where the PRG size of the DL BWP is a configured value.

In some embodiments, the scheduling module 910 is configured to: schedule PRBs that are contiguous and satisfy the first condition in at least one DL subband in the DL BWP in a case where the PRG size of the DL BWP is configured as wideband.

In some embodiments, the scheduling module 910 is further configured to: schedule PRBs in each DL subband in the DL BWP based on the configured value in a case where the PRG size of the DL BWP is a configured value.

In some embodiments, in a case where the PRG size of the first DL subband is configured as wideband, the network device is not expected to schedule non-contiguous PRBs in the first DL subband.

In some embodiments, the scheduling module 910 is further configured to schedule contiguous PRBs in at least one DL subband in the DL BWP.

In some embodiments, in a case where the PRG size of the DL BWP is configured as wideband, the network device is not expected to schedule non-contiguous PRBs in any DL subband included in the DL BWP.

In some embodiments, in a case where the DL BWP includes a plurality of DL subbands, PRG sizes of the plurality of DL subbands are determined in a same manner.

In some embodiments, the PRG sizes of the plurality of DL subbands are configured as wideband.

In some embodiments, the PRG sizes of the plurality of DL subbands are configured as configured values.

In some embodiments, in a case where the DL BWP includes a plurality of DL subbands, PRG sizes of the plurality of DL subbands are determined independently.

In some embodiments, in a case where the DL BWP includes a plurality of DL subbands, the plurality of DL subbands use same precoding, or the plurality of DL subbands use independent precoding.

In the technical solutions according to the embodiments of the present disclosure, the network device schedules PRBs in at least one DL subband in the DL BWP based on the PRG size of the first DL subband or the PRG size of the DL BWP, such that a PRG size of the first DL subband and/or a PRG size of the DL BWP determined by a terminal device is consistent with the PRG size configured by the network device, to ensure channel estimation accuracy.

It should be noted that when the apparatuses according to the above embodiments implement their functions, division into the above functional modules is merely used as an example for description. In practice, the above functions may be allocated to and completed by different functional modules as required, that is, an internal structure of a device is divided into different functional modules, to complete all or some of the above functions.

Specific manners of performing operations by the modules in the apparatus in the foregoing embodiments have been described in detail in the embodiments of the related method, and details are not described herein again. For details not described in the apparatus embodiments, reference may be made to the above method embodiments.

FIG. 10 is a schematic structural diagram of a terminal device according to some embodiments of the present disclosure. The terminal device 1000 may include a processor 1001, a transceiver 1002, and a memory 1003. The transceiver 1002 is configured to implement a transmitting or receiving function. The processor 1001 may be configured to implement another processing function or control transmitting and/or receiving, such as to implement a function of the determining module 810.

The processor 1001 includes one or more processing cores. The processor 1001 runs one or more software programs and modules to run various functional applications and perform information processing.

The transceiver 1002 may include a receiver and a transmitter. For example, the receiver and the transmitter may be implemented as a same wireless communication component. The wireless communication component may include a wireless communication chip and a radio frequency (RF) antenna.

The memory 1003 may be connected to the processor 1001 and the transceiver 1002.

The memory 1003 may be configured to store one or more computer programs loaded and run by the processor. The processor 1001 is configured to load and run the one or more computer programs to implement each process in the above method embodiments.

In some embodiments, the processor 1001 is configured to determine that a PRG size of a first DL subband is a quantity of scheduled PRBs in the first DL subband or that a PRG size of a DL BWP is a quantity of scheduled PRBs in the DL BWP in a case where scheduled PRBs in at least one DL subband in the DL BWP are contiguous and satisfy a first condition. The first DL subband is a DL subband in the DL BWP. A part of frequency domain resources corresponding to the DL BWP are configured as a UL subband. The first condition is related to a quantity of scheduled PRBs.

For details not described in these embodiments, reference may be made to the above embodiments. Details are not described herein again.

In addition, the memory may be implemented by any type of volatile or non-volatile storage device or a combination thereof. The volatile or non-volatile storage device includes but is not limited to a magnetic disk or an optical disc, an electrically erasable programmable read-only memory (EEPROM), an erasable programmable read-only memory (EPROM), a static random access memory (SRAM), a read-only memory (ROM), a magnetic memory, a flash memory, or a programmable read-only memory (PROM).

FIG. 11 is a schematic structural diagram of a network device according to some embodiments of the present disclosure. The network device 1100 may be configured to execute the method steps performed by the network device in the foregoing embodiments.

A processor 1101 includes one or more processing cores. The processor 1101 runs a software program and module to execute various functional applications and information processing. The processor 1101 is configured to perform processes performed by the network device in the above method embodiments except receiving and transmitting processes, such as to implement a function of the scheduling module 910.

A transceiver 1102 may include a receiver and a transmitter. For example, the transceiver 1102 may include a wired communication component. The wired communication component may include a wired communication chip and a wired interface (for example, a fiber interface). In some embodiments, the transceiver 1102 may further include a wireless communication component. The wireless communication component may include a wireless communication chip and an RF antenna. The transceiver 1102 is configured to perform the receiving step and/or the transmitting process performed by the network device in the above method embodiments.

A memory 1103 may be connected to the processor 1101 and the transceiver 1102.

The memory 1103 may be configured to store one or more computer programs loaded and run by the processor. The processor 1101 is configured to load and run the one or more computer programs to implement each process performed by the network device in the above method embodiments.

In addition, the memory 1103 may be implemented by any type of volatile or non-volatile storage device or a combination thereof. The volatile or non-volatile storage device includes but is not limited to a magnetic disk or an optical disc, an EEPROM, an EPROM, an SRAM, a ROM, a magnetic memory, a flash memory, or a PROM.

In some embodiments, the processor 1101 is configured to schedule PRBs that are contiguous and satisfy a first condition in at least one DL subband in a DL BWP. A part of frequency domain resources corresponding to the DL BWP are configured as a UL subband. A first DL subband is a DL subband in the DL BWP. A PRG size of the first DL subband is a quantity of scheduled PRBs in the first DL subband, or a PRG size of the DL BWP is a quantity of scheduled PRBs in the DL BWP. The first condition is related to a quantity of scheduled PRBs.

For details not described in these embodiments, reference may be made to the above embodiments. Details are not described herein again.

Some embodiments of the present disclosure further provide a computer-readable storage medium. The storage medium stores one or more computer programs. The one or more computer programs, when loaded and run by a processor, cause the processor to perform the above method for determining a PRG performed by the terminal device or perform the above method for scheduling a PRB performed by the network device. In some embodiments, the computer-readable storage medium may include a ROM, a random-access memory (RAM), a solid-state drive (SSD), an optical disc, or the like. The RAM may include a resistive RAM (ReRAM) and a dynamic RAM (DRAM).

Some embodiments of the present disclosure further provide a chip. The chip includes a programmable logic circuit and/or one or more program instructions. The chip, when running, is caused to perform the above method for determining a PRG performed by the terminal device or perform the above method for scheduling a PRB performed by the network device.

Some embodiments of the present disclosure further provide a computer program product. The computer program product includes one or more computer programs stored in a computer-readable storage medium. The one or more computer programs, when read from the computer-readable storage medium and executed by a processor, cause the processor to perform the above method for determining a PRG performed by the terminal device or perform the above method for scheduling a PRB performed by the network device.

Some embodiments of the present disclosure further provide a computer program. The computer program is stored in a computer-readable storage medium. The computer program, when read from the computer-readable storage medium and executed by the processor, causes the processor to perform the above method for determining a PRG performed by the terminal device or perform the above method for scheduling a PRB performed by the network device.

It should be understood that the term "indication" mentioned in the embodiments of the present disclosure may refer to direct indication, indirect indication, or indication that an association relationship is present. Illustratively, "A indicates B" may mean that A directly indicates B (e.g., B may be obtained from A), or may mean that A indirectly indicates B (e.g., A indicating C through which B may be obtained), or may mean that an association relationship is present between A and B.

In the description of the embodiments of the present disclosure, the term "correspondence" may indicate a direct or indirect relationship between the two items, or may also indicate an association relationship between the two items, or may indicate relationships such as indicating and being indicated, configuring and being configured, or the like.

In some embodiments of the present disclosure, the term "predefinition" may be implemented by pre-storing a corresponding code, a corresponding table, or another method that may be used to indicate relevant information in a device (such as a terminal device and a network device) and a specific implementation thereof is not limited in the present disclosure. For example, the term "predefined" may be "defined" in a protocol.

In some embodiments of the present disclosure, the term "protocol" may be a standard protocol in the field of communication, and for example, may include an LTE protocol, an NR protocol, and a related protocol applicable to a future communication system. This is not limited in the present disclosure.

In some embodiments of the present disclosure, the term "preconfigured" may be implemented by pre-storing a corresponding code, a corresponding table, or another method that may be used to indicate relevant information in a terminal device, and a specific implementation thereof is not limited in the present disclosure. For example, the term "preconfigured" may be "configured" in a subscriber identity module (SIM) card of the terminal device.

The term "a plurality of" herein refers to two or more. The term "and/or" describes the association relationship between related objects, indicating that three types of relationships may exist. For example, the phrase "A and/or B" means (A), (B), or (A and B). The character "/" generally indicates that the associated objects are in an "or" relationship.

The step numbers described herein are merely illustrative of one possible execution sequence between steps. In some other embodiments, the steps may also be performed in a non-numbered order. For example, two steps with different numbers are performed simultaneously or in the reverse order of the illustrated sequence, which is not limited in the present disclosure.

Those skilled in the art should be able to consciousness that in one or more of the above examples, the functions described in the embodiments of the present disclosure may be implemented in hardware, software, firmware, or any combination thereof. When implemented in software, these functions may be stored on a computer-readable medium or transmitted as one or more instructions or codes on the computer-readable medium. Computer-readable medium includes both computer storage medium and communication medium, where communication medium includes any medium that facilitates the transfer of computer programs from one location to another. Storage medium may be any available medium that may be accessed by a general-purpose or special-purpose computer.

Described above are merely optional embodiments of the present disclosure and are not intended to limit the present disclosure. Any modifications, equivalent replacements, improvements, and the like made within the spirit and principle of the present disclosure shall fall within the protection scope of the present disclosure.

**Claims**

1. A method for determining a precoding resource block group (PRG), performed by a terminal device, the method comprising:

   determining that a PRG size of a first downlink (DL) subband is a quantity of scheduled physical resource blocks (PRBs) in the first DL subband or that a PRG size of a DL bandwidth part (BWP) is a quantity of scheduled PRBs in the DL BWP in a case where scheduled PRBs in at least one DL subband in the DL BWP are contiguous and satisfy a first condition;
   wherein the first DL subband is a DL subband in the DL BWP, a part of frequency domain resources corresponding to the DL BWP are configured as an uplink (UL) subband, and the first condition is related to a quantity of scheduled PRBs.

2. The method according to claim 1, wherein the first condition comprises any one of the following items:

> the quantity of scheduled PRBs in the DL BWP is greater than half of a bandwidth of the DL BWP; the quantity of scheduled PRBs in the DL BWP is greater than half of a sum of bandwidths of all DL subbands in the DL BWP; the quantity of scheduled PRBs in the first DL subband is greater than half of the bandwidth of the DL BWP; the quantity of scheduled PRBs in the first DL subband is greater than half of a sum of bandwidths of all DL subbands in the DL BWP; or the quantity of scheduled PRBs in the first DL subband is greater than half of a bandwidth of the first DL subband.

3. The method according to claim 1 or 2, wherein determining that the PRG size of the first DL subband is the quantity of scheduled PRBs in the first DL subband in the case where the scheduled PRBs in the at least one DL subband in the DL BWP are contiguous and satisfy the first condition comprises: determining that the PRG size of the first DL subband is the quantity of scheduled PRBs in the first DL subband in a case where the scheduled PRBs in the first DL subband are contiguous and satisfy the first condition.

4. The method according to claim 3, further comprising: determining that the PRG size of the first DL subband is a configured value in a case where the scheduled PRBs in the first DL subband are non-contiguous and/or do not satisfy the first condition.

5. The method according to claim 1 or 2, wherein determining that the PRG size of the first DL subband is the quantity of scheduled PRBs in the first DL subband in the case where the scheduled PRBs in the at least one DL subband in the DL BWP are contiguous and satisfy the first condition comprises: determining that the PRG size of the first DL subband is the quantity of scheduled PRBs in the first DL subband in a case where scheduled PRBs in any of the at least one DL subband in the DL BWP are contiguous and satisfy the first condition.

6. The method according to claim 5, further comprising: determining that the PRG size of the first DL subband is a configured value in a case where scheduled PRBs in each DL subband in the DL BWP are non-contiguous and/or do not satisfy the first condition.

7. The method according to claim 1 or 2, wherein determining that the PRG size of the DL BWP is the quantity of scheduled PRBs in the DL BWP in the case where the scheduled PRBs in the at least one DL subband in the DL BWP are contiguous and satisfy the first condition comprises: determining that the PRG size of the DL BWP is the quantity of scheduled PRBs in the DL BWP in a case where scheduled PRBs in each of the at least one DL subband in the DL BWP are contiguous and satisfy the first condition.

8. The method according to claim 7, further comprising: determining that the PRG size of the DL BWP is a configured value in a case where scheduled PRBs in any DL subband in the DL BWP are non-contiguous and/or do not satisfy the first condition.

9. The method according to claim 1 or 2, wherein determining that the PRG size of the DL BWP is the quantity of scheduled PRBs in the DL BWP in the case where the scheduled PRBs in the at least one DL subband in the DL BWP are contiguous and satisfy the first condition comprises: determining that the PRG size of the DL BWP is the quantity of scheduled PRBs in the DL BWP in a case where scheduled PRBs in any of the at least one DL subband in the DL BWP are contiguous and satisfy the first condition.

10. The method according to claim 9, further comprising: determining that the PRG size of the DL BWP is a configured value in a case where scheduled PRBs in each DL subband in the DL BWP are non-contiguous and/or do not satisfy the first condition.

11. The method according to any one of claims 1 to 10, wherein in a case where the PRG size of the first DL subband is configured as wideband, the terminal device is not expected to be scheduled with non-contiguous PRBs in the first DL subband.

12. The method according to claim 11, further comprising:
determining that the PRG size of the first DL subband is the quantity of scheduled PRBs in the first DL subband or that the PRG size of the DL BWP is the quantity of scheduled PRBs in the DL BWP in a case where scheduled PRBs in at least one DL subband in the DL BWP are contiguous.

13. The method according to any one of claims 1 to 10, wherein in a case where the PRG size of the DL BWP is configured as wideband, the terminal device is not expected to be scheduled with non-contiguous PRBs in any of the at least one DL subband in the DL BWP.

14. The method according to any one of claims 1 to 13, wherein in a case where the DL BWP comprises a plurality of DL subbands, PRG sizes of the plurality of DL subbands are determined in a same manner.

15. The method according to claim 14, wherein that the PRG sizes of the plurality of DL subbands are determined in the same manner comprises:
determining that the PRG size of each of the plurality of DL subbands is a quantity of scheduled PRBs in the each of the plurality of DL subbands in a case where at least one of the plurality of DL subbands is determined to use a wideband mode.

16. The method according to claim 14, wherein that the PRG sizes of the plurality of DL subbands are determined in the same manner comprises:
determining that the PRG size of each of the plurality of DL subbands is a configured value corresponding to the each of the plurality of DL subbands in a case where at least one of the plurality of DL subbands is determined to use a configured value.

17. The method according to any one of claims 1 to 13, wherein in a case where the DL BWP comprises a plurality of DL subbands, PRG sizes of the plurality of DL subbands are determined independently.

18. The method according to any one of claims 1 to 17, wherein in a case where the DL BWP comprises a plurality of DL subbands, the plurality of DL subbands use same precoding, or the plurality of DL subbands use independent precoding.

19. A method for scheduling a physical resource block (PRB), performed by a network device, the method comprising:
scheduling PRBs that are contiguous and satisfy a first condition in at least one downlink (DL) subband in a DL bandwidth part (BWP), wherein a part of frequency domain resources corresponding to the DL BWP are configured as an uplink (UL) subband, a first DL subband is a DL subband in the DL BWP, a precoding resource block group (PRG) size of the first DL subband is a quantity of scheduled PRBs in the first DL subband or a PRG size of the DL BWP is a quantity of scheduled PRBs in the DL BWP, and the first condition is related to a quantity of scheduled PRBs.

20. The method according to claim 19, wherein the first condition comprises any one of the following items:

the quantity of scheduled PRBs in the DL BWP is greater than half of a bandwidth of the DL BWP;
the quantity of scheduled PRBs in the DL BWP is greater than half of a sum of bandwidths of all DL subbands in the DL BWP;
the quantity of scheduled PRBs in the first DL subband is greater than half of the bandwidth of the DL BWP;

the quantity of scheduled PRBs in the first DL subband is greater than half of a sum of bandwidths of all DL subbands in the DL BWP; or
the quantity of scheduled PRBs in the first DL subband is greater than half of a bandwidth of the first DL subband.

21. The method according to claim 19 or 20, wherein scheduling the PRBs that are contiguous and satisfy the first condition in the at least one DL subband in the DL BWP comprises:
scheduling PRBs that are contiguous and satisfy the first condition in the first DL subband in a case where the PRG size of the first DL subband is configured as wideband.

22. The method according to claim 21, further comprising:
scheduling PRBs in the first DL subband based on a configured value in a case where the PRG size of the first DL subband is the configured value.

23. The method according to claim 19 or 20, wherein scheduling the PRBs that are contiguous and satisfy the first condition in the at least one DL subband in the DL BWP comprises:
scheduling the PRBs that are contiguous and satisfy the first condition in the at least one DL subband in the DL BWP in a case where the PRG size of the first DL subband is configured as wideband.

24. The method according to claim 23, further comprising:
scheduling PRBs in each of the at least one DL subband in the DL BWP based on a configured value in a case where the PRG size of the first DL subband is the configured value.

25. The method according to claim 19 or 20, wherein scheduling the PRBs that are contiguous and satisfy the first condition in the at least one DL subband in the DL BWP comprises:
scheduling PRBs that are contiguous and satisfy the first condition in each of the at least one DL subband in the DL BWP in a case where the PRG size of the DL BWP is configured as wideband.

26. The method according to claim 25, further comprising:
scheduling PRBs in at least one DL subband in the DL BWP based on a configured value in a case where the PRG size of the DL BWP is the configured value.

27. The method according to claim 19 or 20, wherein scheduling the PRBs that are contiguous and satisfy the first condition in the at least one DL subband in the DL BWP comprises:

scheduling the PRBs that are contiguous and satisfy the first condition in the at least one DL subband in the DL BWP in a case where the PRG size of the DL BWP is configured as wideband.

28. The method according to claim 27, further comprising:
scheduling PRBs in each of the at least one DL subband in the DL BWP based on a configured value in a case where the PRG size of the DL BWP is the configured value.

29. The method according to any one of claims 19 to 28, wherein in a case where the PRG size of the first DL subband is configured as wideband, the network device is not expected to schedule non-contiguous PRBs in the first DL subband.

30. The method according to claim 29, further comprising:
scheduling contiguous PRBs in at least one DL subband in the DL BWP.

31. The method according to any one of claims 19 to 28, wherein in a case where the PRG size of the DL BWP is configured as wideband, the network device is not expected to schedule non-contiguous PRBs in any of the at least one DL subband in the DL BWP.

32. The method according to any one of claims 19 to 31, wherein in a case where the DL BWP comprises a plurality of DL subbands, PRG sizes of the plurality of DL subbands are determined in a same manner.

33. The method according to claim 32, wherein that the PRG sizes of the plurality of DL subbands are determined in the same manner comprises:
configuring the PRG sizes of the plurality of DL subbands as wideband.

34. The method according to claim 32, wherein that the PRG sizes of the plurality of DL subbands are determined in the same manner comprises:
configuring the PRG sizes of the plurality of DL subbands as configured values.

35. The method according to any one of claims 19 to 31, wherein in a case where the DL BWP comprises a plurality of DL subbands, PRG sizes of the plurality of DL subbands are determined independently.

36. The method according to any one of claims 19 to 35, wherein in a case where the DL BWP comprises a plurality of DL subbands, the plurality of DL subbands use same precoding, or the plurality of DL subbands use independent precoding.

37. An apparatus for determining a precoding resource block group (PRG), comprising:
a determining module, configured to determine that a PRG size of a first downlink (DL) subband is a quantity of scheduled physical resource blocks (PRBs) in the first DL subband or that a PRG size of a DL bandwidth part (BWP) is a quantity of scheduled PRBs in the DL BWP in a case where scheduled PRBs in at least one DL subband in the DL BWP are contiguous and satisfy a first condition;
wherein the first DL subband is a DL subband in the DL BWP, a part of frequency domain resources corresponding to the DL BWP are configured as an uplink (UL) subband, and the first condition is related to a quantity of scheduled PRBs.

38. The apparatus according to claim 37, wherein the first condition comprises any one of the following items:

the quantity of scheduled PRBs in the DL BWP is greater than half of a bandwidth of the DL BWP;
the quantity of scheduled PRBs in the DL BWP is greater than half of a sum of bandwidths of all DL subbands in the DL BWP;
the quantity of scheduled PRBs in the first DL subband is greater than half of the bandwidth of the DL BWP;
the quantity of scheduled PRBs in the first DL subband is greater than half of a sum of bandwidths of all DL subbands in the DL BWP; or
the quantity of scheduled PRBs in the first DL subband is greater than half of a bandwidth of the first DL subband.

39. The apparatus according to claim 37 or 38, wherein the determining module is configured to: determine that the PRG size of the first DL subband is the quantity of scheduled PRBs in the first DL subband in a case where the scheduled PRBs in the first DL subband are contiguous and satisfy the first condition.

40. The apparatus according to claim 39, wherein the determining module is further configured to: determine that the PRG size of the first DL subband is a configured value in a case where the scheduled PRBs in the first DL subband are non-contiguous and/or do not satisfy the first condition.

41. The apparatus according to claim 37 or 38, wherein the determining module is configured to: determine that the PRG size of the first DL subband is the quantity of scheduled PRBs in the first DL subband in a case where scheduled PRBs in any of the at least one DL subband in the DL BWP are contiguous and satisfy the first condition.

42. The apparatus according to claim 41, wherein the determining module is further configured to: determine that the PRG size of the first DL subband is a configured value in a case where scheduled PRBs in each of the at least one DL subband in the DL BWP are non-contiguous and/or do not satisfy the first condition.

43. The apparatus according to claim 37 or 38, wherein the determining module is configured to: determine that the PRG size of the DL BWP is the quantity of scheduled PRBs in the DL BWP in a case where scheduled PRBs in each of the at least one DL subband in the DL BWP are contiguous and satisfy the first condition.

44. The apparatus according to claim 43, wherein the determining module is further configured to: determine that the PRG size of the DL BWP is a configured value in a case where scheduled PRBs in any of the at least one DL subband in the DL BWP are non-contiguous and/or do not satisfy the first condition.

45. The apparatus according to claim 37 or 38, wherein the determining module is configured to: determine that the PRG size of the DL BWP is the quantity of scheduled PRBs in the DL BWP in a case where scheduled PRBs in any of the at least one DL subband in the DL BWP are contiguous and satisfy the first condition.

46. The apparatus according to claim 45, wherein the determining module is further configured to: determine that the PRG size of the DL BWP is a configured value in a case where scheduled PRBs in each of the at least one DL subband in the DL BWP are non-contiguous and/or do not satisfy the first condition.

47. The apparatus according to any one of claims 37 to 46, wherein in a case where the PRG size of the first DL subband is configured as wideband, a terminal device is not expected to be scheduled with non-contiguous PRBs in the first DL subband.

48. The apparatus according to claim 47, wherein the determining module is further configured to: determine that the PRG size of the first DL subband is the quantity of scheduled PRBs in the first DL subband or that the PRG size of the DL BWP is the quantity of scheduled PRBs in the DL BWP in a case where scheduled PRBs in the at least one DL subband in the DL BWP are contiguous.

49. The apparatus according to any one of claims 37 to 47, wherein in a case where the PRG size of the DL BWP is configured as wideband, a terminal device is not expected to be scheduled with non-contiguous PRBs in any of the at least one DL subband comprised in the DL BWP.

50. The apparatus according to any one of claims 37 to 49, wherein in a case where the DL BWP comprises a plurality of DL subbands, PRG sizes of the plurality of DL subbands are determined in a same manner.

51. The apparatus according to claim 50, wherein in a case where at least one of the plurality of DL subbands is determined to use a wideband mode, the PRG size of each of the plurality of DL subbands is a quantity of scheduled PRBs in the each of the plurality of DL subbands.

52. The apparatus according to claim 50, wherein in a case where at least one of the plurality of DL subbands is determined to use a configured value, the PRG size of each of the plurality of DL subbands is a configured value corresponding to the each of the plurality of DL subbands.

53. The apparatus according to any one of claims 37 to 49, wherein in a case where the DL BWP comprises a plurality of DL subbands, PRG sizes of the plurality of DL subbands are determined independently.

54. The apparatus according to any one of claims 37 to 53, wherein in a case where the DL BWP comprises a plurality of DL subbands, the plurality of DL subbands use same precoding, or the plurality of DL subbands use independent precoding.

55. An apparatus for scheduling a physical resource block (PRB), comprising:
a scheduling module, configured to schedule PRBs that are contiguous and satisfy a first condition in at least one downlink (DL) subband in a DL bandwidth part (BWP), wherein a part of frequency domain resources corresponding to the DL BWP are configured as an uplink (UL) subband, a first DL subband is a DL subband in the DL BWP, a precoding resource block group (PRG) size of the first DL subband is a quantity of scheduled PRBs in the first DL subband or a PRG size of the DL BWP is a quantity of scheduled PRBs in the DL BWP, and the first condition is related to a quantity of scheduled PRBs.

56. The apparatus according to claim 55, wherein the first condition comprises any one of the following items:

the quantity of scheduled PRBs in the DL BWP is greater than half of a bandwidth of the DL BWP;
the quantity of scheduled PRBs in the DL BWP is greater than half of a sum of bandwidths of all DL subbands in the DL BWP;
the quantity of scheduled PRBs in the first DL subband is greater than half of the bandwidth of the DL BWP;
the quantity of scheduled PRBs in the first DL subband is greater than half of a sum of bandwidths of all DL subbands in the DL BWP; or the quantity of scheduled PRBs in the first DL subband is greater than half of a bandwidth of the first DL subband.

57. The apparatus according to claim 55 or 56, wherein the scheduling module is configured to: schedule PRBs that are contiguous and satisfy the first condition in the first DL subband in a case where the PRG size of the first DL subband is configured as wideband.

58. The apparatus according to claim 57, wherein the scheduling module is further configured to: schedule PRBs in the first DL subband based on a configured value in a case where the PRG size of the first DL subband is the configured value.

59. The apparatus according to claim 55 or 56, wherein the scheduling module is configured to: schedule PRBs that are contiguous and satisfy the first condition in at least one DL subband in the DL BWP in a case where the PRG size of the first DL subband is configured as wideband.

60. The apparatus according to claim 59, wherein the scheduling module is further configured to: schedule PRBs in each of the at least one DL subband in the DL BWP based on a configured value in a case where the PRG size of the first DL subband is the configured value.

61. The apparatus according to claim 55 or 56, wherein the scheduling module is configured to: schedule PRBs that are contiguous and satisfy the first condition in each of the at least one DL subband in the DL BWP in a case where the PRG size of the DL BWP is configured as wideband.

62. The apparatus according to claim 61, wherein the scheduling module is further configured to: schedule PRBs in at least one DL subband in the DL BWP based on a configured value in a case where the PRG size of the DL BWP is the configured value.

63. The apparatus according to claim 55 or 56, wherein the scheduling module is configured to: schedule PRBs that are contiguous and satisfy the first condition in at least one DL subband in the DL BWP in a case where the PRG size of the DL BWP is configured as wideband.

64. The apparatus according to claim 63, wherein the scheduling module is further configured to: schedule PRBs in each of the at least one DL subband in the DL BWP based on a configured value in a case where the PRG size of the DL BWP is the configured value.

65. The apparatus according to any one of claims 55 to 64, wherein in a case where the PRG size of the first DL subband is configured as wideband, a network device is not expected to schedule non-contiguous PRBs in the first DL subband.

66. The apparatus according to claim 65, wherein the scheduling module is further configured to schedule contiguous PRBs in at least one DL subband in the DL BWP.

67. The apparatus according to any one of claims 55 to 64, wherein in a case where the PRG size of the DL BWP is configured as wideband, a network device is not expected to schedule non-contiguous PRBs in any of the at least one DL subband in the DL BWP.

68. The apparatus according to any one of claims 55 to 67, wherein in a case where the DL BWP comprises a plurality of DL subbands, PRG sizes of the plurality of DL subbands are determined in a same manner.

69. The apparatus according to claim 68, wherein the PRG sizes of the plurality of DL subbands are configured as wideband.

70. The apparatus according to claim 68, wherein the PRG sizes of the plurality of DL subbands are configured as configured values.

71. The apparatus according to any one of claims 55 to 67, wherein in a case where the DL BWP comprises a plurality of DL subbands, PRG sizes of the plurality of DL subbands are determined independently.

72. The apparatus according to any one of claims 55 to 71, wherein in a case where the DL BWP comprises a plurality of DL subbands, the plurality of DL subbands use same precoding, or the plurality of DL subbands use independent precoding.

73. A communication device, comprising:

a processor and a memory;
wherein the memory is configured to store at least one computer program, which when executed by the processor, causes the communication device to perform the method as defined in any one of claims 1 to 18 or perform the method as defined in any one of claims 19 to 36.

74. A computer-readable storage medium, storing at least one computer program, wherein the at least one computer program, when executed by a processor, causes the processor to perform the method as defined in any one of claims 1 to 18 or perform the method as defined in any one of claims 19 to 36.

**75.** A chip, comprising at least one programmable logic circuit and/or at least one program instruction, wherein the chip, when running, is caused to perform the method as defined in any one of claims 1 to 18 or perform the method as defined in any one of claims 19 to 36.

**76.** A computer program product, comprising at least one computer instruction stored in a computer-readable storage medium, wherein the at least one computer program, when read from the computer-readable storage medium and executed by a processor, causes the processor to perform the method as defined in any one of claims 1 to 18 or perform the method as defined in any one of claims 19 to 36.

FIG. 1

DL subband

UL subband

DL subband

FIG. 2

DL
resources

Subband 2

Subband 1

Subband 3

FIG. 3

Determining, by a terminal device, that a PRG size of a first DL subband is a quantity of scheduled PRBs in the first DL subband or that a PRG size of a DL BWP is a quantity of scheduled PRBs in the DL BWP in a case where scheduled PRBs in at least one DL subband in the DL BWP are contiguous and satisfy a first condition

410

FIG. 4

DL
resources

Subband 2

Subband 1

Subband 3

First time domain range

FIG. 5

DL
resources

Subband 1

Subband 4

Subband 2

Subband 3

FIG. 6

710

Scheduling, by a network device, PRBs that are contiguous and satisfy a first condition in at least one DL subband in a DL BWP, wherein the DL BWP includes at least one DL subband, a part of frequency domain resources corresponding to the DL BWP are configured as a UL subband, a first DL subband is a DL subband in the DL BWP, a PRG size of the first DL subband is quantity of scheduled PRBs in the first DL subband or a PRG size of the DL BWP is a quantity of scheduled PRBs in the DL BWP, and the first condition is related to a quantity of scheduled PRBs

FIG. 7

800

810

Determining module

FIG. 8

900

910

Scheduling module

FIG. 9

Terminal device 1000

Processor 1001

Transceiver 1002

Wireless communication chip

RF antenna

Wireless communication component

Memory 1003

FIG. 10

Network device 1100

Processor 1101

Transceiver 1102

Wired communication chip

Wired interface

Wired communication component

Wireless communication chip

RF antenna

Wireless communication component

Memory 1103

FIG. 11

## INTERNATIONAL SEARCH REPORT

| International application No. |
|---|
| **PCT/CN2023/112337** |

### A. CLASSIFICATION OF SUBJECT MATTER

H04W72/1273(2023.01)i; H04W72/04(2023.01)i

According to International Patent Classification (IPC) or to both national classification and IPC

### B. FIELDS SEARCHED

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

CNTXT, ENTXT, 3GPP, ENTXTC, DWPI: 预编码, 资源块, 组, 带宽, 部分, 调度, 物理, 连续, 条件, 子带, 大小, 尺寸, 数, 上行, 频域, 资源, precoding, resource, block, group, bandwidth, partial, BWP, scheduling, physical, continuous, conditional, subband, size, number, uplink, UL, frequency, domain, DL, PRG, PRB

### C. DOCUMENTS CONSIDERED TO BE RELEVANT

| Category* | Citation of document, with indication, where appropriate, of the relevant passages | Relevant to claim No. |
|---|---|---|
| E | CN 116830721 A (BEIJING XIAOMI MOBILE SOFTWARE CO., LTD.) 29 September 2023 (2023-09-29) description, paragraphs [0153]-[0533] | 1-76 |
| X | WO 2021031041 A1 (HUAWEI TECHNOLOGIES CO., LTD.) 25 February 2021 (2021-02-25) description, page 6 line 20-page 23 line 4 | 1-76 |
| A | CN 112399590 A (HUAWEI TECHNOLOGIES CO., LTD.) 23 February 2021 (2021-02-23) entire document | 1-76 |
| A | SPREADTRUM COMMUNICATIONS. "Discussion on subband non-overlapping full duplex" *3GPP TSG RAN WG1 #112bis-e, R1-2302599*, 26 April 2023 (2023-04-26), entire document | 1-76 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 April 2024** | **11 April 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| | International application No. |
|---|---|
| | **PCT/CN2023/112337** |

| C. | DOCUMENTS CONSIDERED TO BE RELEVANT | |
|---|---|---|
| Category* | Citation of document, with indication, where appropriate, of the relevant passages | Relevant to claim No. |
| A | HUAWEI et al. "Discussion on potential enhancement on subband non-overlapping full duplex" *3GPP TSG-RAN WG1 Meeting #112, R1-2300087*, 03 March 2023 (2023-03-03), entire document | 1-76 |

Form PCT/ISA/210 (second sheet) (July 2022)

**INTERNATIONAL SEARCH REPORT**
Information on patent family members

International application No.

**PCT/CN2023/112337**

| Patent document cited in search report | | | Publication date (day/month/year) | Patent family member(s) | | | Publication date (day/month/year) |
|---|---|---|---|---|---|---|---|
| CN | 116830721 | A | 29 September 2023 | None | | | |
| WO | 2021031041 | A1 | 25 February 2021 | CN | 114270978 | A | 01 April 2022 |
| CN | 112399590 | A | 23 February 2021 | WO | 2021032028 | A1 | 25 February 2021 |
| | | | | IN | 202247011068 | A | 18 March 2022 |
| | | | | US | 2022173851 | A1 | 02 June 2022 |
| | | | | EP | 4017175 | A1 | 22 June 2022 |

Form PCT/ISA/210 (patent family annex) (July 2022)